# EUROPEAN PATENT APPLICATION

(11) **EP 4 091 779 A1**
(43) Date of publication of application: **23.11.2022**
(21) Application number: 20913935.1
(22) Date of filing: 24.11.2020
(51) Int. Cl.: B25J 19/06, G06Q 10/00, G05B 19/418, G06Q 50/04

(54) **EQUIPMENT CONTROL SYSTEM, CONTROL METHOD, AND PROGRAM**

(30) Priority: 17.01.2020 JP 2020006371
(71) Applicant: Panasonic Intellectual Property Management Co., Ltd., Osaka-shi, Osaka 540-6207 (JP)
(72) Inventor: YAMASHITA, Isao, Chuo-ku, Osaka-shi, Osaka 540-6207 (JP); FURUKAWA, Yoshiki, Chuo-ku, Osaka-shi, Osaka 540-6207 (JP)
(74) Representative: SSM Sandmair
(86) International application number: PCT/JP2020/043553
(87) International publication number: WO 2021/145070

(57) **Abstract**

Provided is an equipment control system capable of improving the compatibility of equipment and individuals such as persons. An equipment control system (1) includes a control unit configured to control equipment (3) based on an authority set for each of a plurality of individuals (2) and a relative positional relationship between the equipment (3) and each of the plurality of individuals (2).

## Description

### TECHNICAL FIELD

The present disclosure generally relates to an equipment control system, a control method, and a program. More specifically, the present disclosure relates to an equipment control system, a control method, and a program related to, for example, equipment of which individuals such as persons work in the vicinity.

### BACKGROUND ART

Patent Literature 1 describes a worker safety management system for managing safety of a worker in a work place including a work region. The work region is defined by being surrounded by a protective fence. A part of the protective fence is provided with an access gate for gaining access into the work region.

The system includes an ID tag reader placed in an appropriate location of the work place to read safety management information on each worker from an ID tag carried by the corresponding worker, and a safety management control device that performs a control related to safety management of the worker based on the read safety management information. The safety management information includes a work region code indicating a work region permitted to the worker and a danger avoiding capability code indicating a degree of danger avoiding capability of the worker.

### CITATION LIST

### PATENT LITERATURE

Patent Literature 1: WO-A1-2007/010795

### SUMMARY OF INVENTION

### TECHNICAL PROBLEM

There is a case where it is desired to further improve the compatibility of equipment and individuals such as persons.

The present disclosure has been made in view of the above circumstances, and an object thereof is to provide an equipment control system, a control method, and a program capable of improving the compatibility of equipment and individuals such as persons.

### SOLUTION TO PROBLEM

An equipment control system according to an aspect of the present disclosure includes a control unit configured to control equipment based on an authority set for each of a plurality of individuals and a relative positional relationship between the equipment and each of the plurality of individuals.

A control method according to an aspect of the present disclosure is a control method for an equipment control system. The control method includes controlling equipment based on an authority set for each of a plurality of individuals and a relative positional relationship between the equipment and each of the plurality of individuals.

A program according to an aspect of the present disclosure is a program for causing one or more processors to execute the above control method.

### ADVANTAGEOUS EFFECTS OF INVENTION

According to the present disclosure, there is an advantage that it is possible to improve the compatibility of the equipment and the individuals such as persons.

### BRIEF DESCRIPTION OF DRAWINGS

Fig. 1 is a schematic diagram showing an overall configuration of an equipment control system according to an embodiment.
Fig. 2 is a block configuration diagram of a server device and a plurality of terminals in the same equipment control system.
Fig. 3A is a schematic diagram illustrating an operation of the same equipment control system.
Fig. 3B is a schematic diagram illustrating an operation of the same equipment control system.
Fig. 3C is a schematic diagram illustrating an operation of the same equipment control system.
Fig. 4A is a conceptual diagram of a display screen of a display device in the same equipment control system.
Fig. 4B is a conceptual diagram of a display screen of the display device in the same equipment control system.
Fig. 4C is a conceptual diagram of a display screen of the display device in the same equipment control system.
Fig. 5A is a schematic diagram illustrating an operation of the same equipment control system.
Fig. 5B is a schematic diagram illustrating an operation of the same equipment control system.
Fig. 5C is a schematic diagram illustrating an operation of the same equipment control system.
Fig. 5D is a schematic diagram illustrating an operation of the same equipment control system.
Fig. 5E is a schematic diagram illustrating an operation of the same equipment control system.
Fig. 6 is a conceptual diagram of a display screen of an information terminal for an administrator in the same equipment control system.
Fig. 7 is a conceptual diagram of an interior of a facility to which the same equipment control system is introduced.
Fig. 8 is a flowchart illustrating an operation of the same equipment control system.
Fig. 9 is a flowchart illustrating an operation of the same equipment control system.
Fig. 10A is a conceptual diagram showing a modification related to a detection area in the same equipment control system.
Fig. 10B is a conceptual diagram showing a modification related to the detection area in the same equipment control system.
Fig. 11 is a conceptual diagram showing another modification of the same equipment control system.

### DESCRIPTION OF EMBODIMENTS

### (1) Outline

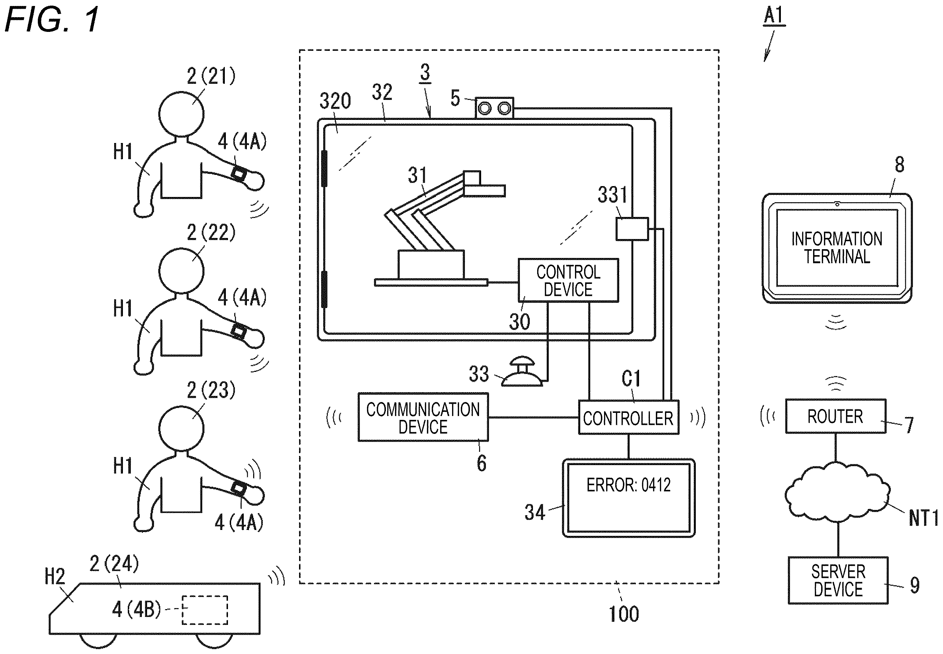

Hereinafter, an equipment control system 1 according to the present embodiment will be described with reference to Figs. 1 to 9.

Each of the drawings described in the following embodiment is a schematic diagram, and a ratio of each of a dimension and a thickness of each constituent element in each of the drawings does not necessarily reflect an actual dimensional ratio.

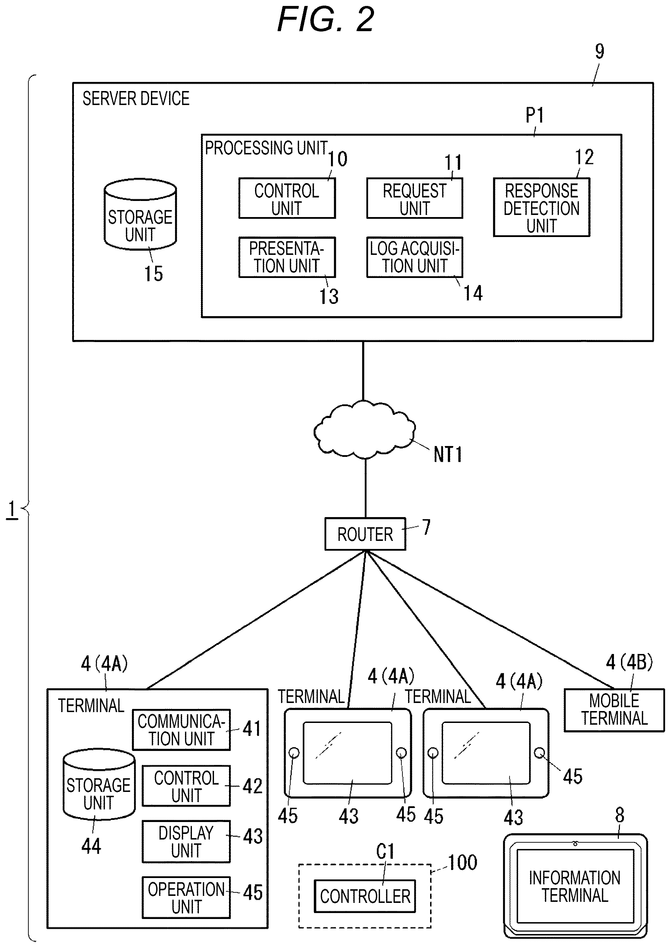

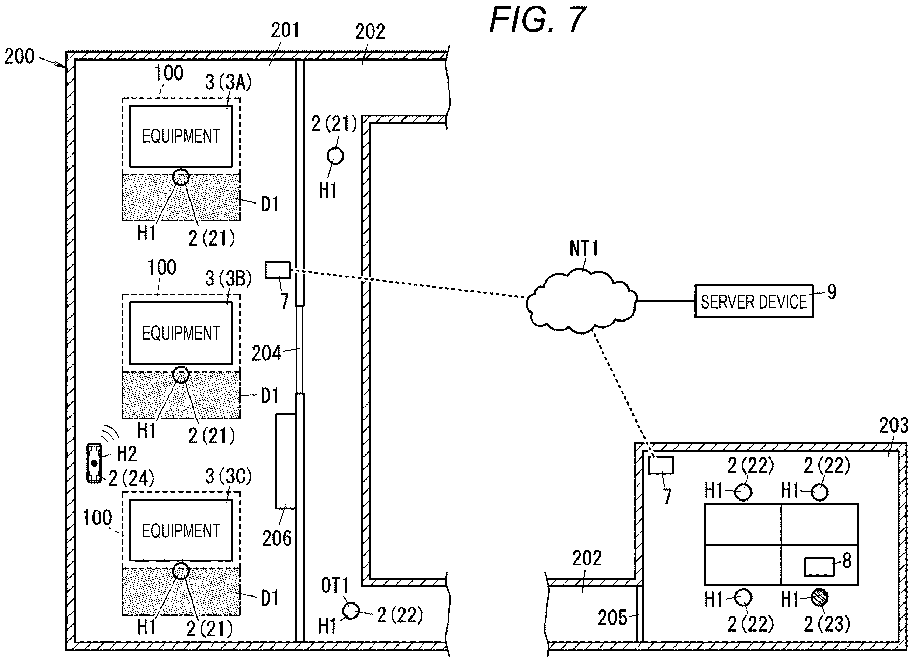

The equipment control system 1 (see Fig. 2) according to the present embodiment controls one or more equipment 3 (three in Fig. 7) installed in a facility 200 (see Fig. 7). The "facility 200" of the present disclosure is assumed to be, for example, a factory. However, the facility 200 is not limited to a factory, and may be a distribution warehouse or the like. The "equipment 3" of the present disclosure is assumed to be production equipment installed in a production line or the like. Specifically, as shown in Fig. 1, the equipment 3 is assumed to be, for example, a robot arm 31 (a mechanical arm) capable of performing operations such as holding, transporting, turning, and releasing a subject (a component), and capable of executing, for example, tasks such as mounting or assembling the component, but is not particularly limited. The equipment 3 may be processing equipment, welding equipment, mounting equipment, coating equipment, assembly equipment, inspection equipment, or label/sheet peeling and attaching equipment, or may be conveyance equipment such as a belt conveyor or an elevator.

Here, the equipment control system 1 includes a control unit 10 (see Fig. 2). The control unit 10 controls the equipment 3 based on an "authority set for each of a plurality of individuals 2" and a "relative positional relationship between the equipment 3 and each of the plurality of individuals 2". The "individual 2" of the present disclosure is assumed to be, for example, a person H1 or a mobile body H2. Here, the plurality of individuals 2 include, for example, a plurality of persons H1 and a plurality of (in the shown example, only one) mobile bodies H2. The plurality of persons H1 may include, for example, an operator 21 who operates the equipment 3 near the equipment 3, a technician 22 who has specialized knowledge or a qualification related to the equipment 3, and an administrator 23 (for example, a line leader) who manages the equipment 3 of the entire facility 200 or the equipment 3 of a part of a line, and further a person who is not allowed to operate, maintain, or manage the equipment 3, but is only permitted to pass through the vicinity of the equipment 3 due to business or other reasons. The plurality of mobile bodies H2 may include, for example, an automated guided vehicle (AGV) 24, a mobile robot, and a drone. The mobile robot is, for example, a wheel type, a crawler type, or a leg type (including a walking type) robot. The individual 2 may be, for example, a living body (an animal) other than a human, in addition to the person H1 and the mobile body H2. The plurality of mobile bodies H2 may include mobile bodies H2 of the same type as each other. In this case, for example, the plurality of mobile bodies H2 of the same type operate on substantially the same track. As a matter of course, the mobile bodies H2 of the same type may operate on different tracks. Alternatively, the plurality of mobile bodies H2 may include a plurality of types of mobile bodies H2 that are different from each other, and the plurality of types of mobile bodies H2 may include mobile bodies that operate on different tracks. The mobile body H2 is not limited to a plurality of mobile bodies, and may be a single mobile body.

Hereinafter, it is assumed that the authority is associated with, for example, each of a plurality of terminals 4 owned by the plurality of individuals 2, respectively. When the individual 2 is the person H1, the terminal 4 is a wearable terminal 4A (a wearable computer) that can be mounted or worn by the person H1. In the shown example, the wearable terminal 4A is, for example, a wristwatch type terminal, but is not particularly limited, and may be a terminal such as a spectacle type, a ring type, a shoe type, a pendant type, a belt type, or a pocket type terminal. When the individual 2 is the mobile body H2, the terminal 4 is a mobile terminal 4B mounted or built in a device body of the mobile body H2. The terminal 4 is not limited to the wearable terminal 4A, and may be, for example, a notebook computer, a tablet terminal, a smartphone, or the like. In this case, the person H1 operates the terminal 4 and associates an authority with the terminal 4. For example, the person H1 may associate the authority with the terminal 4 by inputting an ID, a password, and the like of the person to the terminal 4.

Here, the "positional relationship" is information based on positional information of the plurality of terminals 4 owned by the plurality of individuals 2, respectively. That is, for example, the control unit 10 controls the equipment 3 based on the "authority" and the "positional relationship between the equipment 3 and the terminal 4". The "information based on positional information" here may be the positional information itself, or may be converted information obtained by converting the positional information into corresponding information. The positional information may be an absolute position such as latitude and longitude, or may be relative positional information with reference to a position as a certain reference.

The control unit 10 has at least a normal mode and an event mode as operation modes. When no specific event (a failure such as an equipment abnormality) occurs in the equipment 3, the control unit 10 operates in the normal mode. In this case, based on a positional relationship between the equipment 3 and the individual 2 having, for example, an operator authority, the control unit 10 allows the equipment 3 to operate a normal work, for example, when the individual 2 is present within a certain distance with reference to the equipment 3. On the other hand, when a specific event occurs in the equipment 3, the control unit 10 switches the operation mode to the event mode, and searches for the individual 2 having an authority capable of handling the specific event. Based on a positional relationship between the equipment 3 and the individual 2 having the authority capable of handling the specific event, the control unit 10 allows the equipment 3 to perform an operation related to maintenance, for example, when the individual 2 is present within a certain distance with reference to the equipment 3.

The authority may broadly include, for example, an operation authority allowing a specific operation of the equipment 3 and an unpermitted authority that does not allow a specific operation of the equipment 3. The "specific operation" includes, for example, an operation of a normal work using the equipment 3 and an operation related to maintenance of the equipment 3. The "operation related to maintenance" includes, for example, unlocking of a locking device 331 in a door 320 of a case 32 in which the robot arm 31 is accommodated, and stopping, deceleration, and interruption of power supply of a predetermined portion of the robot arm 31. In the normal mode, it is preferable that the robot arm 31 does not operate in a released state of the door 320 of the case 32 or an unlocked state of the locking device 331. However, in the event mode, an operation of driving the robot arm 31 in the released state of the door 320 of the case 32 or the unlocked state of the locking device 331 is allowed as the "operation related to maintenance".

Hereinafter, it is assumed that functions of the control unit 10 are provided in, for example, one server device 9 (see Fig. 2), but the functions may be provided in a plurality of server devices in a distributed manner. Such a server device may construct a cloud (cloud computing). At least a part of the functions of the control unit 10 may be provided in a controller C1 (see Fig. 1) of each equipment 3.

According to this configuration, the control unit 10 controls the equipment 3 based on the authority (authority information) set for each of the plurality of individuals 2 and the relative positional relationship between the equipment 3 and each of the plurality of individuals 2. Therefore, it is possible to improve the compatibility of the equipment 3 and the individuals 2 such as persons.

### (2) Details

### (2.1) Overall Configuration of Production Management System

An overall configuration of a production management system A1 including the equipment control system 1 according to the present embodiment will be described. As shown in Fig. 1, the production management system A1 includes a plurality of equipment systems 100 (only one is shown in Fig. 1) and the equipment control system 1 (see Fig. 2). As shown in Fig. 2, the equipment control system 1 includes the plurality of (client) terminals 4 owned by the plurality of individuals 2, respectively, the server device 9, an information terminal 8, and one or more routers 7 (two in Fig. 7). Here, the controller C1 of each equipment system 100 also constitutes a part of the equipment control system 1.

As shown in Fig. 7, in the facility 200, the two routers 7 are respectively arranged in an office area 203 and a production area 201 in which the plurality of equipment 3 is installed. Each of the routers 7 communicates with the server device 9 installed in an appropriate location such as a management room, a monitoring room, a disaster prevention center room, or a guardroom in the facility 200 via a network NT1 such as the Internet. The network NT1 is not limited to the Internet, and, for example, a local communication network in the facility 200 may be applied. The server device 9 may be installed outside the facility 200. Further, it is preferable that the router 7 is also installed outside the facility 200. The router 7 may be installed in, for example, a building of a management company that integrally manages a plurality of facilities 200 or a manufacturer that performs maintenance of the equipment 3. The server device 9 may be installed in, for example, the building of the management company that integrally manages the plurality of facilities 200. The server device 9 will be described in detail in the column of "(2.4) Server Device".

Communication between the router 7 and the equipment 3 (the controller C1 to be described later) and communication between the router 7 and the information terminal 8 adopt, for example, wireless communication conforming to a standard such as Wi-Fi (registered trademark) capable of performing communication at a relatively long distance, but the communication standard is not particularly limited. The communication between the router 7 and the equipment 3 and the communication between the router 7 and the information terminal 8 are not limited to the wireless communication, and may include wired communication in part or in whole thereof.

### (2.2) Equipment System

As shown in Fig. 1, the equipment system 100 includes the equipment 3, an individual detection unit 5, and a communication device 6.

The equipment 3 includes a control device 30, the robot arm 31 (a device to be controlled), the case 32, an operation unit 33, a display device 34, and the controller C1. The equipment 3 is electrically connected to, for example, a system power source such as a commercial AC power source to receive power supply.

As described above, the robot arm 31 is capable of performing the operations such as holding, transporting, turning, and releasing the subject (the component), and capable of executing, for example, the tasks such as mounting or assembling the component.

The control device 30 is configured to control the robot arm 31. The control device 30 has a main configuration of a computer system including one or more processors and one or more memories. In the control device 30, each function of the control device 30 is realized by executing, by one or more processors, a program recorded in the memory. The program may be recorded in advance in the memory, may be provided through a telecommunication line such as the Internet, or may be provided by being recorded in a non-transitory recording medium such as a memory card.

The control device 30 is electrically connected to each of the robot arm 31, the controller C1, and the operation unit 33. The control device 30 causes the robot arm 31 to perform a predetermined task by executing a predetermined program. When the control device 30 receives an input signal from the operation unit 33 in response to an operation by the person H1 such as the operator 21 or the technician 22 to the operation unit 33, the control device 30 can perform control in response to the input signal on the robot arm 31.

Further, the control device 30 monitors a state of the robot arm 31. Particularly, when the control device 30 detects an equipment abnormality (the specific event) that may occur in the robot arm 31, the control device 30 notifies the controller C1 of the detection of the equipment abnormality. The control device 30 stores an error code corresponding to each equipment abnormality in its own memory, and transmits an abnormal signal including an error code corresponding to an equipment abnormality to the controller C1 when the equipment abnormality is detected. Hereinafter, as examples of the equipment abnormalities, a relatively low-level abnormality (workpiece jam) and a not-low-level (middle-level or high-level) abnormality (arm head damage of the robot arm 31) will be described.

A determination criterion for the "low" level of the equipment abnormality is based on whether the equipment abnormality can be eliminated (handled) with the knowledge and a technical level of an operator. For example, the "workpiece jam" is a low-level equipment abnormality that can be handled even by the operator 21.

On the other hand, the "arm head damage" is a middle-level equipment abnormality that cannot be handled by the operator 21. However, the "arm head damage" is an equipment abnormality that can be handled by the technician 22. Types of the equipment abnormalities are not limited to these, and may include a defective part other than an arm head (for example, defective rotation of a servomotor), a circuit failure, disconnection, and the like. The types of the equipment abnormalities may include, for example, an equipment abnormality that cannot be handled even by the technician 22. Depending on a type of an equipment abnormality (for example, high level), it is necessary to request the outside (for example, an equipment manufacturer) to repair the equipment 3.

The specific event is not limited to the equipment abnormality, and may be, for example, periodical maintenance and that a replacement time of an equipment component (a time of repair, update, or the like) is near. Alternatively, the specific event may be prediction information of the equipment abnormality (sign information indicating a sign of an abnormality). The determination criterion for the "low" level of the equipment abnormality may be based on whether a dedicated tool set is necessary for a recovery work.

The case 32 has a rectangular box shape having translucency (for example, transparency). The case 32 accommodates the robot arm 31 therein. Further, the control device 30 may also be accommodated in the case 32. The case 32 includes the door 320 which can be opened and closed in front of the case 32. However, in a normal state (for example, when a maintenance work such as a recovery work is not performed), the locking device 331 (for example, a magnet type electric lock) provided in the case 32 is in a locked state. Unless the locking device 331 is in the unlocked state, the door 320 cannot be opened. The locking device 331 is locked or unlocked in response to a drive signal received from the controller C1.

The operation unit 33 is disposed in the vicinity of the robot arm 31. The operation unit 33 includes a joystick lever, a push button switch, and the like. The operation unit 33 receives an operation input related to the above-described operation of the robot arm 31. The operation unit 33 receives an operation input related to an adjustment of a moving speed and power of the arm head, and the like. Further, the person H1 can cause the robot arm 31 to perform any operation by an operation to the operation unit 33. Further, the operation unit 33 may receive an operation related to operating and stopping the robot arm 31. In this case, it is preferable that the operation unit 33 is disposed outside the case 32 and in the vicinity of the case 32. Hereinafter, an operation related to a normal production work performed by using the robot arm 31 may be referred to as a "normal operation" of the robot arm 31. However, an allowed operation is limited depending on the authority set for the person H1. For example, the person H1 who has only the operator authority is allowed to perform the normal operation alone.

The controller C1 is disposed outside the case 32, for example, beside the case 32. The controller C1 is electrically connected to the control device 30, the locking device 331, the individual detection unit 5, and the communication device 6, and is configured to control these. The controller C1 has a main configuration of a computer system including one or more processors and one or more memories. In the controller C1, each function of the controller C1 is realized by executing, by one or more processors, a program recorded in the memory. The program may be recorded in advance in the memory, may be provided through a telecommunication line such as the Internet, or may be provided by being recorded in a non-transitory recording medium such as a memory card. The controller C1 may include at least a part of the functions of the control device 30.

The controller C1 includes a communication interface for communicating with each of the information terminal 8 and the server device 9 via the router 7. The controller C1 can bidirectionally communicate with each of the information terminal 8 and the server device 9. That is, the controller C1 and each of the information terminal 8 and the server device 9 can exchange information with each other.

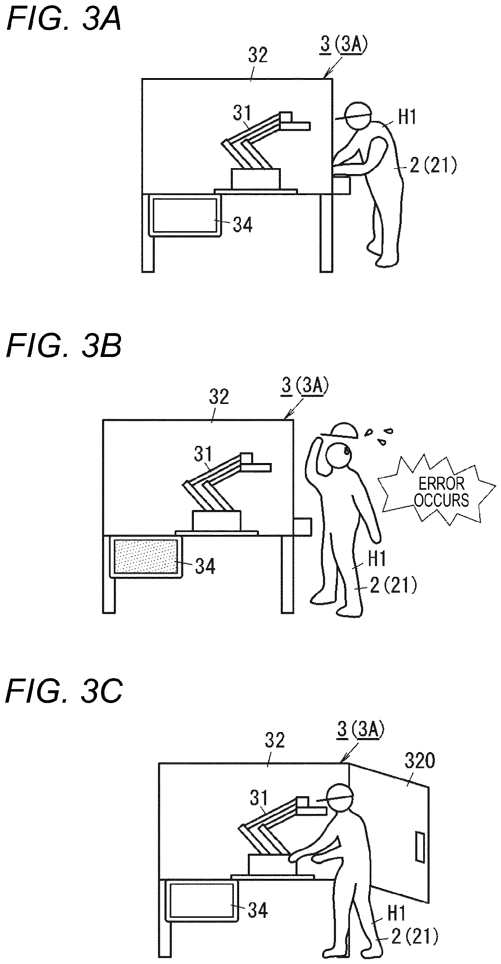

For example, as shown in Figs. 3A to 3C, the display device 34 is fixed to a base that supports the case 32. The display device 34 is implemented by, for example, an image display device such as a liquid crystal display or an organic electro luminescence (EL) display. Here, the display device 34 is a touch panel type display. The display device 34 displays information related to a state of the equipment 3 (particularly the robot arm 31) on a screen under control of the controller C1. For example, when the specific event, for example, the failure such as the equipment abnormality occurs in the robot arm 31, the display device 34 notifies the person H1 of the occurrence of the specific event. The equipment 3 further includes a speaker, and the controller C1 outputs a voice message, a warning sound, or the like from the speaker to notify the person H1 of the occurrence of the specific event. In addition, the equipment 3 may further include a signal tower (not shown) in which lights of different colors are turned on depending on the state of the equipment 3.

The individual detection unit 5 detects presence or absence of (the plurality of) individuals 2 in a detection area D1 (see Fig. 7) set around the equipment 3. The individual detection unit 5 is implemented by, for example, an ultrasonic sensor, and measures a distance to the individual 2 by measuring a time from transmission of an ultrasonic wave to reception of a reflected wave reflected by the subject (the individual 2) (time of flight (TOF)). When the controller C1 receives a detection signal including distance information from the individual detection unit 5, the controller C1 determines whether the individual 2 is present in the detection area D1 based on the detection signal (including determination regarding entry and exit). When the controller C1 determines that the individual 2 enters the detection area D1, the controller C1 transmits the result together with identification information and/or authority information received by the communication device 6 to be described later to the server device 9 via the router 7. Here, for example, the individual detection unit 5 is disposed on an upper portion of the case 32, and the detection area D1 is set in a space in front of the robot arm 31.

The communication device 6 is disposed in the vicinity of the equipment 3. The communication device 6 communicates with the terminal 4. The communication device 6 is electrically connected to the controller C1. The communication device 6 receives an operation power source from the controller C1. The communication between the communication device 6 and the terminal 4 adopts, for example, wireless communication conforming to a standard such as Bluetooth (registered trademark) having a relatively short communication distance compared with Wi-Fi (registered trademark), but the communication standard is not particularly limited. However, it is preferable that communication between the communication device 6 and the terminal 4 is possible in a region within the detection area D1. The communication device 6 performs the wireless communication with the terminal 4, and receives a signal including information (the authority information) related to the authority of the individual 2 held (stored) by the terminal 4. As the authority information, for example, information obtained by converting the authority assigned to each individual 2 into a data signal, unique identification information of the terminal 4, unique identification information of the individual 2, or the like can be used. When the controller C1 determines that the individual 2 enters into (or exits from) the detection area D1, the controller C1 transmits the authority information, information related to the distance information received from the individual detection unit 5, and the like to the server device 9, and causes the server device 9 to perform authentication related to the authority of the individual 2 (hereinafter referred to as "authority authentication"). The communication device 6 may transmit a received signal strength indicator (RSSI) of a current radio wave from the terminal 4 to the controller C1 together with the authority information. In this case, an RSSI value may be transmitted as the information related to the distance information received from the individual detection unit 5.

Hereinafter, as long as the individual 2 is present in the detection area D1, the controller C1 continues to transmit the authority information, the information related to the distance information, and the like to the server device 9 at a fixed interval. A region in which communication is possible between the communication device 6 and the terminal 4 may include the detection area D1 and may be wider than the detection area D1. In this case, the controller C1 may transmit the authority information and the information related to the distance information when the individual 2 enters the detection area D1, and may transmit the authority information and a signal indicating that the individual 2 exits from the detection area D1 when the individual 2 goes out of the area. In this case, the number of times of communication between the communication device 6 and the terminal 4 can be decreased. Therefore, an amount of electric power used in the terminal 4 can be reduced.

Here, the individual 2 not owning the terminal 4 may enter the detection area D1. In this case, instead of causing the server device 9 to perform the authority authentication, for example, the controller C1 transmits to the server device 9 that the individual 2 having no authority enters the detection area D1, displays the information on the display device 34, or outputs a warning sound from the speaker (not shown).

The information terminal 8 is a terminal having a function of receiving an operation of a user and a function of presenting (displaying) information to the user. The "user" of the information terminal 8 is assumed as, for example, the person H1 such as the administrator 23. The information terminal 8 has a main configuration of a computer system including a memory and a processor. In the present embodiment, the information terminal 8 is, for example, a terminal such as a tablet terminal owned (carried) by the administrator 23. However, the information terminal 8 may be a terminal such as a personal computer or a smartphone. The information terminal 8 realizes, by installing dedicated application software and activating the application software, a function of communicating with the controller C1 and the server device 9 and a function of displaying various information received from the controller C1 and the server device 9 on a screen.

When the controller C1 receives the abnormal signal from the control device 30, the controller C1 notifies the server device 9 of the occurrence of the equipment abnormality including the error code in the abnormal signal. Particularly, the server device 9 manages the occurrence of all the equipment abnormalities regardless of the level of the equipment abnormality, and thus the controller C1 notifies the server device 9 of the occurrence of all the equipment abnormalities.

The server device 9 determines whether the equipment abnormality is at a low level (whether the equipment abnormality can be handled even by the currently working person HI) based on the error code. The server device 9 recognizes the authority of the currently working person H1 (for example, the operator 21) through the authority information received from the communication device 6 at the time when the person H1 enters the region in which the communication is possible between the communication device 6 and the terminal 4. The server device 9 determines whether the person H1 can handle the occurred equipment abnormality with reference to error handling information to be described later (hereinafter referred to as "handling appropriateness determination processing").

When the controller C1 receives, from the server device 9, a determination result that the person H1 can handle the equipment abnormality, the controller C1 displays the content on the display device 34, and further allows the operation related to maintenance in response to an instruction from the server device 9. Examples of the operation related to maintenance include unlocking the locking device 331 and switching the operation mode of the control device 30 to a maintenance mode. The maintenance mode includes, for example, stop of a predetermined portion, deceleration of a predetermined portion (for example, low-speed rotation of the servomotor), and interruption of power supply to a predetermined portion of the robot arm 31. However, as described later, an allowed operation is limited by an authority level.

On the other hand, when the person H1 cannot handle the equipment abnormality, the server device 9 executes a "call" of another individual 2 having an authority capable of handling the equipment abnormality (hereinafter referred to as "call processing"). Even when the equipment abnormality is at a low level, the server device 9 also executes the call processing when the operator 21 temporarily exits from the detection area D1 and the detection area D1 is in a no-person state. When the controller C1 receives from the server device 9 that the call processing is being executed, the controller C1 indicates through the display device 34 that another individual 2 having the authority capable of handling the equipment abnormality is being called.

The handling appropriateness determination processing may be executed by the controller C1. In this case, the controller C1 may notify the server device 9 of the occurrence of the equipment abnormality including the error code, and request the execution of the call processing only when the equipment abnormality is at a level equal to or higher than a middle level. Accordingly, the communication between the controller C1 and the server device 9 when the equipment abnormality is at the low level can be omitted, and the responsiveness can be improved.

### (2.3) Terminal

The plurality of terminals 4 include a plurality of wearable terminals 4A (three in Fig. 1) and a plurality of mobile terminals 4B (one in Fig. 1).

The wearable terminal 4A is a wristwatch type client terminal that can be mounted or worn by the person H1. Here, in the facility 200 (the factory), one wearable terminal 4A is assigned to each of all the plurality of persons H1 who are involved in a work related to the plurality of equipment 3. Each person H1 performs a work in the facility 200 in a state in which the wearable terminal 4A of the person is worn on the wrist. In short, each person H1 carries the assigned wearable terminal 4A at least during working hours. For convenience of description, the following description may focus on three persons (the operator 21, the technician 22, and the administrator 23) among the plurality of persons H1.

The wearable terminal 4A stores the authority (the authority information) set for the person H1 who is the individual 2, and transmits the authority information to the communication device 6. Specifically, as shown in Fig. 2, the wearable terminal 4A includes a communication unit 41, a control unit 42, a display unit 43, a storage unit 44, and operation units 45.

The communication unit 41 includes a first communication interface for performing wireless communication (see Fig. 1) with the communication device 6 at a short distance, and a second communication interface for performing wireless communication (see Fig. 2) with the router 7 by Wi-Fi (registered trademark) or the like.

The control unit 42 has a main configuration of a computer system including one or more processors and one or more memories. In the control unit 42, each function of the control unit 42 is realized by executing, by one or more processors, a program recorded in the memory. The program may be recorded in advance in the memory, may be provided through a telecommunication line such as the Internet, or may be provided by being recorded in a non-transitory recording medium such as a memory card. The control unit 42 controls the communication unit 41, the display unit 43, and the operation units 45.

The display unit 43 is implemented by, for example, an image display device such as a liquid crystal display or an organic EL display. The display unit 43 may be configured to receive an operation input (a tap operation or the like) from the person H1 as a touch panel type display. The display unit 43 displays various information on a screen under control of the control unit 42. Particularly, in the present embodiment, request information to be described later is displayed on the screen.

The storage unit 44 includes a readable and writable memory. The storage unit 44 is, for example, a flash memory. The storage unit 44 is provided outside the control unit 42, but may be provided inside the control unit 42. That is, the storage unit 44 may be a built-in memory of the control unit 42. The storage unit 44 stores various data. Particularly, the storage unit 44 stores an identification number of the host device (the wearable terminal 4A), authority information of the person H1 who is an owner, and identification information for specifying the person H1. The identification information of the person H1 may include an employee code of the owner. However, the authority information of the person H1 may be stored in association with the employee code on a server device 9 side instead of the storage unit 44 of the wearable terminal 4A. The authority information will be described in detail in the column of "(2.5) Authority".

The operation unit 45 includes, for example, two push button switches arranged on both left and right sides of the display unit 43 respectively and configured to receive an operation input (a pressing operation) from the person H1.

The control unit 42 is configured to transmit the identification number of the host device and the authority information and the identification information of the person H1 to the communication device 6 through the first communication interface of the communication unit 41.

The control unit 42 receives the request information from the server device 9 via the second communication interface of the communication unit 41 and the router 7. In addition to the request information, the wearable terminal 4A receives various information (notice information and the like in the facility 200) from the server device 9, and displays the information on the display unit 43 at an appropriate timing.

The wearable terminal 4A has a function of acquiring current positional information of the host device using a satellite positioning system such as a global positioning system (GPS), and transmitting the positional information to the server device 9 (for example, periodically) via the second communication interface of the communication unit 41 and the router 7.

The mobile terminal 4B is a client terminal that is mounted or built in the device body of the mobile body H2. Here, the mobile body H2 is assumed to be the automated guided vehicle (AGV) 24 that performs a work of conveying a conveyance object such as a component while moving in a specific area of the facility 200 (for example, the production area 201). Here, although the detailed description of a control related to the conveying work of the automated guided vehicle 24 is omitted, the automated guided vehicle 24 loads the conveyance object and autonomously travels to a destination in the facility 200 in response to a control signal received by wireless communication via the router 7. The server device 9 may have a function of generating and transmitting the control signal, or a mobile body management system provided separately from the server device 9 may have the function of generating and transmitting the control signal.

The mobile terminal 4B further includes a control unit having a main configuration of a computer system including one or more processors and one or more memories. The mobile terminal 4B stores authority information and identification information of the host device in its own memory. The mobile terminal 4B includes a communication interface for transmitting the authority information and the identification information of the host device to the communication device 6.

The identification information of the mobile terminal 4B includes, for example, an identification code for distinguishing the mobile terminal 4B from another mobile body H2 in the facility 200. The authority information of the mobile terminal 4B may be stored in association with the identification information on the server device 9 side instead of the memory of the mobile terminal 4B.

The control unit of the mobile terminal 4B is configured to transmit the authority information and the identification information of the host device to the communication device 6.

The mobile terminal 4B has a function of acquiring current positional information of the host device using the satellite positioning system such as GPS, and transmitting the positional information to the server device 9 (for example, periodically) via the communication interface of the host device and the router 7.

### (2.4) Server Device

As shown in Fig. 2, the server device 9 includes a processing unit P1 and a storage unit 15. The server device 9 further includes a communication interface for communicating with the plurality of terminals 4 via the router 7.

The processing unit P1 has a main configuration of a computer system including one or more processors and one or more memories. In the processing unit PI, each function of the processing unit PI is realized by executing, by one or more processors, a program recorded in the memory. The program may be recorded in advance in the memory, may be provided through a telecommunication line such as the Internet, or may be provided by being recorded in a non-transitory recording medium such as a memory card.

The storage unit 15 includes a readable and writable memory. The storage unit 15 is, for example, a flash memory. The storage unit 15 is provided outside the processing unit PI, but may be provided inside the processing unit PI. That is, the storage unit 15 may be a built-in memory of the processing unit PI. The storage unit 15 stores various data to be described later.

The server device 9 stores and manages, in the storage unit 15, "person information" related to the person H1 having a possibility of performing a work at least in the vicinity of the equipment 3, and "mobile body information" related to the mobile body H2 having a possibility of passing at least in the vicinity of the equipment 3 in the facility 200.

The person information includes identification information such as an employee code, a department code, a name, a mail address, and a telephone number, identification information (an address) of the wearable terminal 4A owned by the person H1, and current positional information of the person H1. The current positional information includes, for example, information of unknown position such as a case where a power source of the terminal 4 is not turned on. The storage unit 15 stores person information for each person H1. When the wearable terminal 4A does not store the authority information, the storage unit 15 stores the person information including the authority information of the person H1.

The mobile body information includes identification information, current positional information of the mobile body H2, and the like. The storage unit 15 stores the mobile body information for each mobile body H2. When the mobile terminal 4B does not store the authority information, the storage unit 15 stores the mobile body information including the authority information of the mobile body H2.

The server device 9 stores and manages, in the storage unit 15, "allowable operation information" in which each authority level of the authority information is associated with an allowable operation for the equipment 3. The allowable operation information will be described in detail in the column of "(2.5) Authority".

As shown in Fig. 2, the processing unit P1 includes the control unit 10, a request unit 11, a response detection unit 12, a presentation unit 13, and a log acquisition unit 14.

The control unit 10 is configured to control the equipment 3 based on the authority (the authority information) and the relative positional relationship between the equipment 3 and each of the plurality of individuals 2. The positional relationship is the information based on the positional information of the plurality of terminals 4 owned by the plurality of individuals 2, respectively. Therefore, the control unit 10 controls the equipment 3 based on the "authority" and the "positional relationship between the equipment 3 and the terminal 4". The control unit 10 of the present embodiment causes the equipment 3 to perform the specific operation of the equipment 3 when the equipment 3 and the individual 2 in which the authority including the operation authority allowing the specific operation is set, among the plurality of individuals 2, are in a specific positional relationship. The "specific operation" includes the operation related to the maintenance of the equipment 3 (hereinafter, simply referred to as a "maintenance operation"). Here, the specific operation, for example, includes the normal operation of the equipment 3 and the maintenance operation of the equipment 3.

Specifically, the control unit 10 has the normal mode and the event mode as the operation modes. When no specific event (the failure such as the equipment abnormality) occurs in the equipment 3, the control unit 10 operates in the normal mode. Based on a positional relationship between the equipment 3 and the person H1 having, for example, the operator authority, the control unit 10 allows the equipment 3 to perform the normal operation when the individual 2 is present within a certain distance (for example, within a range of 1 to 2 meters) with reference to the equipment 3 (the specific positional relationship). As described above, the normal operation is an operation related to the normal production work performed by using the robot arm 31.

Here, the control unit 10 obtains the positional relationship by using, as a trigger, detection of the entry of the individual 2 into the detection area D1 by the individual detection unit 5. The control unit 10 obtains the positional relationship based on the RSSI value from the communication device 6. That is, the relative positional relationship between the individual 2 and the equipment 3 is information based on a measurement result obtained by measuring positions of (the plurality of) individuals 2 with reference to the equipment 3 using radio waves. In the present embodiment, the positional relationship is obtained by using, as the trigger, the detection of entry into the detection area D1, and thus a processing load of the server device 9 can be reduced as compared with, for example, a case where the positional relationship is always obtained.

As described above, when the controller C1 determines that the individual 2 enters the detection area D1, the controller C1 transmits the identification information and the authority information of the individual 2 to the server device 9 together with the determination result. Here, when the control unit 10 receives the determination result indicating the entry into the detection area D1, the control unit 10 may determine that a condition of the "specific positional relationship" that "the individual 2 is present within a certain distance with reference to the equipment 3" is satisfied. That is, the relative positional relationship between the individual 2 and the equipment 3 is defined with reference to the detection area D1. However, when the detection area D1 is a relatively wide region, it is desirable to obtain the positional relationship based on the RSSI value.

The control unit 10 determines an allowable operation based on the received authority information with reference to the allowable operation information in the storage unit 15, and transmits a permission signal allowing the determined operation to the controller C1.

In short, when the operator 21 wearing the wearable terminal 4A enters the detection area D1 during the operation in the normal mode, the control unit 10 checks (authenticates) the authority of the operator 21 and allows the normal operation to the controller C1. When the operator 21 wearing the wearable terminal 4A exits from the detection area D1 during the operation in the normal mode, the control unit 10 checks the authority of the operator 21 and continues the normal operation to the controller C1. Accordingly, even when the operator 21 exits from the detection area D1, the equipment 3 can continue to operate. However, when the control unit 10 detects a person who does not have the authority permitting the normal operation of the equipment 3 during the operation in the normal mode, the control unit 10 does not permit the normal operation to the controller C1. For example, in a case where the operator 21 also serves as a worker who supplies a subject to the equipment 3, when the operator 21 exits from the detection area D1, the control unit 10 may check the authority of the operator 21, and may not permit the normal operation to the controller C1. That is, in this case, when the operator 21 exits from the detection area D1, the equipment 3 stops. The operator 21 returns to the detection area D1 to reoperate equipment 3. Accordingly, the power consumption of the equipment 3 can be reduced.

On the other hand, when a specific event occurs in the equipment 3, the control unit 10 switches the operation mode to the event mode. The event mode is executed by using, as a trigger, reception of the occurrence of the equipment abnormality (the specific event) from the control unit 10 and the controller C1. The event mode is a mode that executes the "handling appropriateness determination processing" determining whether the specific event can be handled even with the authority of the currently working person H1 (whether the specific event is the low-level equipment abnormality), and the "call processing" calling the individual 2 having the authority capable of handling the specific event when the specific event cannot be handled with the authority of the person H1. In the call processing, the control unit 10 causes the request unit 11 to output the request information. The request unit 11 searches the facility 200 for the individual 2 having the authority capable of handling the specific event, and issues a handling request.

That is, when the specific event related to the equipment 3 occurs, the request unit 11 outputs request information requesting handling of the specific event to at least one of the plurality of individuals 2. Here, for example, the request unit 11 determines an output destination OT1 (see Fig. 7) of the request information based on the authority.

Specifically, the storage unit 15 stores the error handling information in which each error code is associated with an authority capable of handling an equipment abnormality of the error code. First, the control unit 10 executes the handling appropriateness determination processing, and determines whether the specific event can be handled even with the authority of the currently working person H1 (whether the specific event is the low-level equipment abnormality). That is, the control unit 10 extracts the authority corresponding to the error code received from the controller C1 with reference to the error handling information in the storage unit 15, and determines whether the extracted authority is an authority having a higher authority level, or an authority having the same or lower authority level than the authority of the currently working person H1. When the control unit 10 determines that the extracted authority is the authority having the same or lower authority level than the authority of the currently working person H1 and that the person H1 can also handle the specific event, the control unit 10 transmits an instruction to allow the maintenance operation of the equipment 3 to the controller C1.

On the other hand, when the control unit 10 determines that the extracted authority is higher than the authority of the currently working person H1 and that the person H1 cannot handle the specific event, the control unit 10 executes the call processing. The request unit 11 extracts the authority capable of handling the equipment abnormality of the error code received from the controller C1 with reference to the error handling information in the storage unit 15, and further selects (one or more) persons H1 having the extracted authority from the person information in the storage unit 15 (selection of a suitable person) with reference to the person information. The request unit 11 designates the identification information (the address) of the wearable terminal 4A owned by the selected suitable person (determines the output destination OT1), and transmits the request information to the wearable terminal 4A by multicast via the router 7.

It is preferable that the request unit 11 of the present embodiment further considers the positional relationship at the time of determination of the output destination OT1. The request unit 11 may simultaneously transmit the request information to all the individuals 2 (the suitable persons) having the authority capable of handling the equipment abnormality. However, in this case, the request information may also be transmitted to, for example, the wearable terminal 4A of the suitable person present at a position relatively far from an occurrence site (the equipment 3) of the specific event. For the suitable person present at a far position, it takes time and effort to go to the occurrence site, leading to a decrease in productivity. Therefore, the request unit 11 determines the output destination OT1 based on the "authority" and the "positional relationship between the equipment 3 and the terminal 4". For example, the request unit 11 performs transmitting in order from the wearable terminal 4A of the suitable person present at a position closest to the occurrence site among the wearable terminals 4A of all the suitable persons (the persons H1) having the authority capable of handling the equipment abnormality. The request unit 11 acquires the positional information of each terminal 4 and calculates, for example, a linear distance from the equipment 3 to the terminal 4, thereby determining the positional relationship between the equipment 3 and the terminal 4. The server device 9 preferably stores map information of the facility 200 in the storage unit 15. In this case, for example, the request unit 11 can detect the suitable person (the person HI) present at the closest position by the acquired positional information of the terminal and the map information. Accordingly, the request unit 11 can select the closest suitable person also in consideration of, for example, a structure of a passage area 202 in the facility 200, arrangement of a door 204, and the like. Further, it is preferable that the request unit 11 also acquires unique identification information of the router 7 communicating with the terminal 4. In this case, information related to an installation position of the router 7 is stored in advance in the storage unit 15 of the server device 9. The information related to the installation position of the router 7 may include, for example, an installation location and an installation floor. Accordingly, the position of the terminal 4 can be specified by taking into account not only planar information but also three-dimensional information of the facility 200.

On the other hand, when the wearable terminal 4A receives the request information, the wearable terminal 4A displays, on the display unit 43, a request message (a character string message) for requesting the person H1 to go to a site where an equipment abnormality occurs and to handle the abnormality. The request message may be a voice message output from the speaker of the wearable terminal 4A, or an image message such as a pictogram displayed on the display unit 43, in addition to the character string message.

The person H1 replies whether to handle the equipment abnormality through a pressing operation to the operation unit 45 of the wearable terminal 4A or a tap operation on the display unit 43. When the person H1 determines that the request can be handled, the person H1 inputs an intention of positive to the request to the wearable terminal 4A. Accordingly, the wearable terminal 4A returns a response signal indicating "positive" to the server device 9 via the router 7. When it is determined that the person H1 cannot immediately go to the site due to various circumstances, and cannot handle the handling request of the equipment abnormality, the person H1 inputs an intention of negative to the wearable terminal 4A. Accordingly, the wearable terminal 4A returns a response signal indicating "negative" to the server device 9 via the router 7.

Here, the response detection unit 12 detects the individual 2 responding to the request information among the plurality of individuals 2. This "detection" corresponds to, for example, identifying the individual 2 by receiving a response signal indicating "positive" or "negative" from the wearable terminal 4A.

Specifically, when a response signal indicating "positive" is received, the response detection unit 12 specifies the name, the employee code, and the like of the person H1 who owns the wearable terminal 4A with reference to the person information in the storage unit 15 based on the address of the wearable terminal 4A at a transmission source. The control unit 10 instructs the controller C1 to display, on the display device 34, the name and the like of the person H1 having an intention to go to the occurrence site. At this time, the control unit 10 causes the display device 34 to display, for example, "Mr. AA has been notified of handling". In the present embodiment, the response detection unit 12 identifies the individual 2, so that the individual 2 making a response can be easily managed.

When a response signal indicating "negative" is received by the response detection unit 12, or when no response signal is detected from the wearable terminal 4A even after a predetermined period (for example, several minutes) elapses, the request unit 11 transmits the request information to the wearable terminal 4A of the person H1 located at a position next closest to the occurrence site.

When the response signal indicating "positive" is not obtained even after the transmission to the wearable terminals 4A of all the persons H1 having the authority capable of handling the equipment abnormality is finished, the request unit 11 retransmits the request information to the wearable terminal 4A of the person H1 located at a position closest to the occurrence site. Alternatively, the request unit 11 reports to the information terminal 8 of the administrator 23 that the person H1 who can handle the equipment abnormality is not present.

When the person H1 arrives at the site, the controller C1 transmits the identification information and the authority information of the individual 2 to the server device 9 together with the determination result when determining that the person H1 enters the detection area D1. The control unit 10 determines whether the equipment abnormality can be handled with the authority of the individual 2 based on the received identification information and authority information of the individual 2. The determination as to whether the equipment abnormality can be handled with the authority of the individual 2 can be made, for example, based on whether the identification information of the individual 2 received by the control unit 10 matches the identification information of the person H1 who issues the response signal indicating "positive". When the control unit 10 determines that the equipment abnormality can be handled with the authority of the individual 2, the control unit 10 transmits the instruction to allow the maintenance operation to the controller C1. Further, the request unit 11 transmits, to the information terminal 8, a signal indicating that the person H1 indicating the intention of "positive" arrives at the site where the abnormality occurs. As a result, the person H1 who arrives at the occurrence site can perform the recovery work (the maintenance) of the equipment 3. When the recovery work is completed, the request unit 11 transmits a signal indicating that the recovery work is completed to the information terminal 8, and all the wearable terminals 4A to which the request information is transmitted, and causes the display units 43 to display that the recovery work is completed.

Some error codes received from the controller C1 require a plurality of persons H1 for recovery of an abnormal state of the equipment 3. Therefore, the error handling information in the storage unit 15 also stores the number of persons necessary for the error code. When the request unit 11 receives such an error code, the request unit 11 continues to issue the handling request until the number of response signals indicating "positive" reaches the necessary number of persons. However, when the control unit 10 determines that the equipment abnormality can be handled with the authority of the detected individual 2, the control unit 10 transmits the instruction to allow the maintenance operation to the controller C1 even when not all the persons indicating the intention of "positive" are prepared.

The person H1 having the authority capable of handling the equipment abnormality may arrive at the site separately from the person H1 indicating the intention of "positive". In this case, although the individual 2 arrived earlier at the site is not the person H1 indicating the intention of "positive", the control unit 10 can determine that the equipment abnormality can be handled with the authority of the individual 2. Therefore, also in this case, the control unit 10 may be configured to transmit the instruction to allow the maintenance operation to the controller C1.

When the person H1 arrived earlier has an intention to act as a substitute for conducting processing requested by another person H1, it is preferable that the person H1 operates the terminal 4, the operation unit 33, or the like to input to the controller C1 that the person H1 acts as a substitute for conducting the processing. The controller C1 that detects this operation transmits, to the control unit 10, a signal (substituting signal) indicating that the person H1 acts as a substitute for conducting the processing. In this case, when the control unit 10 receives the substituting signal and determines that the equipment abnormality can be handled with the authority of the individual 2, the control unit 10 transmits the instruction to allow the maintenance operation. At this time, the request unit 11 transmits a signal indicating that a substitute arrives at the site to the terminal 4 of the person H1 indicating the intention of "positive". In response to receiving the signal, the display unit 43 of the terminal 4 of the person H1 indicating the intention of "positive" displays a message (such as the character string message) corresponding to the signal. Further, the request unit 11 transmits, to the information terminal 8, a signal indicating that the person H1 acting as a substitute for conducting the processing arrives at the site where the abnormality occurs.

When a response of the individual 2 detected by the response detection unit 12 is a positive response, the presentation unit 13 presents handling information related to the handling of the specific event to the individual 2. The "handling information" here includes, for example, positional information (which may be map information) of the occurrence site (the equipment 3), a name of the equipment 3 (robot arm No. 1), and the like. The "handling information" further includes a content of the occurred equipment abnormality (the arm head damage), a manual for maintenance of the equipment 3 (converted into data), a type (a tool number) of a recommended tool set necessary for handling the occurred equipment abnormality, and the like. The "handling information" further includes information related to an (estimated) time required for the recovery work for the equipment abnormality.

The server device 9 stores and manages, in the storage unit 15, equipment information (including a model number, a name, a manual, and the like of equipment) of the equipment 3 in the facility 200 as an equipment ledger, and a type of a tool set and the like as a tool ledger. The server device 9 may appropriately download and store a manual and the like from an external server operated by the equipment manufacturer of the equipment 3 via the network NT 1.

A presentation destination of the handling information includes the display unit 43 of the wearable terminal 4A that makes the positive response and the display device 34 of the equipment 3 that is the occurrence site. The presentation unit 13 transmits the handling information to the presentation destination and causes the presentation destination to present the handling information. For example, the positional information of the occurrence site, the name of the equipment 3, and the content of the equipment abnormality are presented on the display unit 43 of the wearable terminal 4A. The manual of the equipment 3 is presented, for example, on the display device 34 of the equipment 3. The type of the tool set is presented, for example, on both the display unit 43 and the display device 34. Further, a display device connected to the server device 9 via the network NT1 is disposed in a tool rack 206 (see Fig. 7). The presentation unit 13 also causes the display device disposed in the tool rack 206 to display the handling information. Further, the presentation unit 13 also causes the terminal 4 of the operator of the equipment 3 to display the handling information. However, the presentation destination of the handling information is not particularly limited.

Since the presentation unit 13 presents the handling information in this way, the work efficiency is improved when the individual 2 handles the specific event. For example, a person H1 such as an operator other than the individual 2 can also perform preparation for processing in advance.

The log acquisition unit 14 acquires a log related to at least one of the control of the control unit 10 and the operation of the equipment 3 (here, both). The log acquisition unit 14 acquires a log (log information) related to a location (the equipment 3) where the specific event occurs, a content of the specific event, an occurrence time (time stamp), and the like. The log acquisition unit 14 acquires a log related to a location (the equipment 3) where the entry into (or exit from) the detection area D1 occurs, the authority information and the identification information of the individual 2 entering into (or exiting from) the detection area D1, an occurrence time, and the like. The log acquisition unit 14 acquires a log related to an execution time of various processing such as the handling appropriateness determination processing and the call processing in the control unit 10, a time at which a response is received from the wearable terminal 4A, and the like. In this way, the log acquisition unit 14 acquires the logs. Particularly, the server device 9 accumulates the log information acquired by the log acquisition unit 14 in the storage unit 15, generates statistical information, and outputs the statistical information to the controller C1, the information terminal 8, and the like. Therefore, the administrator 23 such as the line leader can easily analyze a cause of various specific events occurring in the equipment 3, for example. The logs may be output to a server outside the facility 200.

### (2.5) Authority

Next, the authority (the authority information) will be described. The authority in the present disclosure is associated with each of the plurality of terminals 4 owned by the plurality of individuals 2, respectively.

As shown in the following Table 1, the authority information includes a combination of an individual code, a work type code, and an equipment code. The authority is not limited to including such a combination of a plurality of codes. For example, the individual code and the work type code may be omitted. The authority information may further include information indicating an error code that can be handled, and in this case, it is not necessary to manage the error handling information in which the authority information is associated with the error code, separately from the authority information.

**[Table1]**

| | Individual code | Work type code | Equipment code | | |
|---|---|---|---|---|---|
| | | | Equipment (1) | Equipment (2) | Equipment (3) |
| Operator | A | 1 | C | - | - |
| Technician | A | 2 | A | B | C |
| Administrator | A | 3 | S | S | S |
| Mobile body | B | 4 | - | - | - |

The individual code is a code for distinguishing the person H1 and the mobile body H2 that are owners of the terminals 4 from each other, and is set to "A" for the person H1 and "B" for the mobile body H2.

The work type code is a code for distinguishing the operator 21, the technician 22, and the administrator 23 from each other, and is set to "1" for the operator 21, "2" for the technician 22, and "3" for the administrator 23. When the mobile body H2 is the automated guided vehicle 24, the work type code is set to "4".

The equipment code includes equipment (1) to equipment (3) as shown in Table 1 in accordance with the number of equipment 3 (here, three). The equipment (1) to the equipment (3) correspond to first equipment 3A, second equipment 3B, and third equipment 3C (see Fig. 7), respectively. The first equipment 3A, the second equipment 3B, and the third equipment 3C are of different types. The above-described robot arm 31 is provided in the first equipment 3A, and another device different from the robot arm 31 is provided in the other second equipment 3B and third equipment 3C.

Any one of a plurality of authority levels (for example, five stages of "S", "A" to "C", and "-") is set in each of the equipment (1) to the equipment (3). In other words, the authority (the authority level) of the present embodiment is set in a plurality of stages. As the authority level is higher, more types of specific operations are allowed. It is assumed that the authority level is highest in "S", followed by "A", and then the authority level decreases toward "B" and "C". The blank "-" of the authority level indicates that there is no allowed specific operation. In other words, the authority of the present embodiment includes the unpermitted authority that does not allow the specific operation of the equipment 3.

That is, in the present embodiment, for example, the authority levels "S" and "A" to "C" are the operation authority allowing the specific operation of the equipment 3, and the authority level "-" is the unpermitted authority that does not allow the specific operation.

In this way, in the present embodiment, the authority of each individual 2 can be differentiated by setting the authority in the plurality of stages, for example, by setting the authority in different stages to the plurality of individuals 2. The authority includes the unpermitted authority, and thus a possibility can be reduced that the equipment 3 unintentionally performs a specific operation when the individual 2 and the equipment 3 that have the unpermitted authority unintentionally satisfy, for example, a specific positional relationship.

Setting the authority level in units of the equipment 3 is merely an example, and is not particularly limited. The authority level may be set in a plurality of stages, for example, based on a difference in specific operations (a difference in the normal operation and the maintenance operation). The authority level may be set in units of production processes.

The authority level "S" is an administrator authority, and in an example of Table 1, for the administrator 23, "S" is assigned to authority levels of the equipment (1) to the equipment (3). In addition to the normal operation and the maintenance operation, the administrator 23 of the authority level "S" may be allowed to perform, for example, a special operation such as stopping all the equipment 3 in the production line. The administrator 23 of the authority level "S" can access the server device 9 through the information terminal 8 to perform registration, change, deletion, and the like related to the authority of the person H1 who is a subordinate of the administrator 23.

The authority levels "A" and "B" are mainly a technician authority, and in the example of Table 1, for the technician 22, "A" is assigned to an authority level of the equipment (1), and "B" is assigned to an authority level of the equipment (2). The technician 22 is allowed to perform all maintenance operations to the first equipment 3A. On the other hand, the technician 22 is allowed to perform only a part of maintenance operations to the second equipment 3B. The technician 22 is also allowed to perform the normal operation corresponding to a lower authority, that is, the authority of the authority level "C", to the first equipment 3A and the second equipment 3B. However, the technician 22 does not have specialized knowledge of the third equipment 3C, and "C" is assigned to an authority level of the equipment (3).

The authority level "C" is mainly the operator authority, and in the example of Table 1, since the operator 21 is in charge of the first equipment 3A, "C" is assigned to an authority level of the equipment (1). However, since the operator 21 is not in charge of the second equipment 3B and the third equipment 3C, "-" is assigned to authority levels of the equipment (2) and equipment (3).

In short, in the example of Table 1, the authority of the operator 21 is "A1C--". The authority of the technician 22 is "A2ABC". The authority of the administrator 23 is "A3SSS". For the mobile body H2, "-" is assigned to authority levels of all the equipment, and the authority is "B4---".

The allowable operation information is information in which each authority level of the authority information is associated with an allowable operation for the equipment 3. For example, in the allowable operation information, the authority level "A" of the equipment (1) is associated with the normal operation and all the maintenance operations (including the unlocking of the locking device 331) related to the first equipment 3A. In the allowable operation information, the authority level "B" of the equipment (1) is associated with the normal operation and a part of maintenance operations (including the unlocking of the locking device 331) related to the first equipment 3A. The authority level "C" of the equipment (1) is associated with the normal operation and a part of maintenance operations (including the unlocking of the locking device 331, and more limited than the authority level "B") related to the first equipment 3A.

The authority may further include a "temporary code". The administrator 23 of the authority level "S" may access the server device 9 through the information terminal 8, and temporarily assign the authority level "B" corresponding to the technician to, for example, a "temporary code" of the operator 21. In the authority authentication, the server device 9 first refers to an authority level of the "temporary code", and preferentially determines the authority level. However, the authority level of the "temporary code" has a time limit, and is automatically invalidated when, for example, 24 hours elapses.

### (2.6) Management of Positional Information

Here, management of the positional information in the server device 9 will be described. The server device 9 manages the positional information of the plurality of persons H1 and the plurality of mobile bodies H2 in the facility 200. As described above, the server device 9 periodically acquires the current positional information of the terminal 4 via the router 7 from the terminal 4 (the wearable terminal 4A and the mobile terminal 4B) using the GPS or the like. If the facility 200 is a building including a plurality of layers (floors), the server device 9 manages coordinates (X-Y coordinates) of the terminal 4 in units of each floor. Particularly, the server device 9 stores map information (which may be three-dimensional map information) for each floor in the facility 200. The server device 9 divides the floor into a plurality of sections (here, the production area 201, the passage area 202, and the office area 203), and manages a location of the terminal 4 in units of sections.

When a size of one section is large, the server device 9 further divides the section into a plurality of small sections, and manages a location of the terminal 4 in units of small sections. For example, the production area 201 is wider than the other areas, and is particularly an area where the plurality of equipment 3 is installed, and thus the server device 9 divides the production area 201 into a plurality of small sections for management. The plurality of small sections include, for example, the detection area D1 set on a front side of each of the above-described equipment 3. That is, the server device 9 determines the position of the terminal 4 by further using the detection result by the individual detection unit 5, thereby more increasing the reliability of the positional information. The server device 9 determines the position of the terminal 4 by further using the RSSI value from the communication device 6, thereby further increasing the reliability of the positional information.

The server device 9 (the request unit 11) assigns priorities to the plurality of sections in the order of transmitting the request information to the selected suitable person. The production area 201 has a highest priority, and a next highest priority is set to the passage area 202 adjacent to the production area 201, and a lowest priority is set to the office area 203 away from the production area 201. When a plurality of suitable persons are present in each section, the server device 9 simultaneously transmits the request information to all the suitable persons in the section.

### (2.7) Operation of Equipment Control System

Hereinafter, operations of the equipment control system 1 of the present embodiment will be described with reference to Figs. 1 to 9.

First, before the description of the operations is performed, a situation in the facility 200 shown in Fig. 7 will be described. Fig. 7 is a schematic view of only a part of areas (the production area 201, the passage area 202, and the office area 203) in the facility 200 as viewed from above. In an example of Fig. 7, three equipment 3 (the first equipment 3A, the second equipment 3B, and the third equipment 3C) is installed in the production area 201, and one operator 21 is working for each equipment 3. That is, the operator 21 is performing the production work using the equipment 3 in the detection area D1 of the equipment 3 in charge. The production area 201 and the passage area 202 are connected to each other via the door 204. The office area 203 and the passage area 202 are connected to each other via a door 205. One operator 21 and one technician 22 are walking in the passage area 202. In the office area 203, three technicians 22 and one administrator 23 are working at respective desks. The information terminal 8 is placed on the desk of the administrator 23. One router 7 is installed in each of the production area 201 and the office area 203.

A controller device that automatically opens and closes a door may be installed in the vicinity of each of the doors 204 and 205. In this case, for example, the controller device performs short-distance communication with the wearable terminal 4A, performs authentication based on the identification information of the person H1 acquired from the wearable terminal 4A, and automatically opens the corresponding door when the authentication is successful.

### [Operation Example 1: Workpiece Jam]

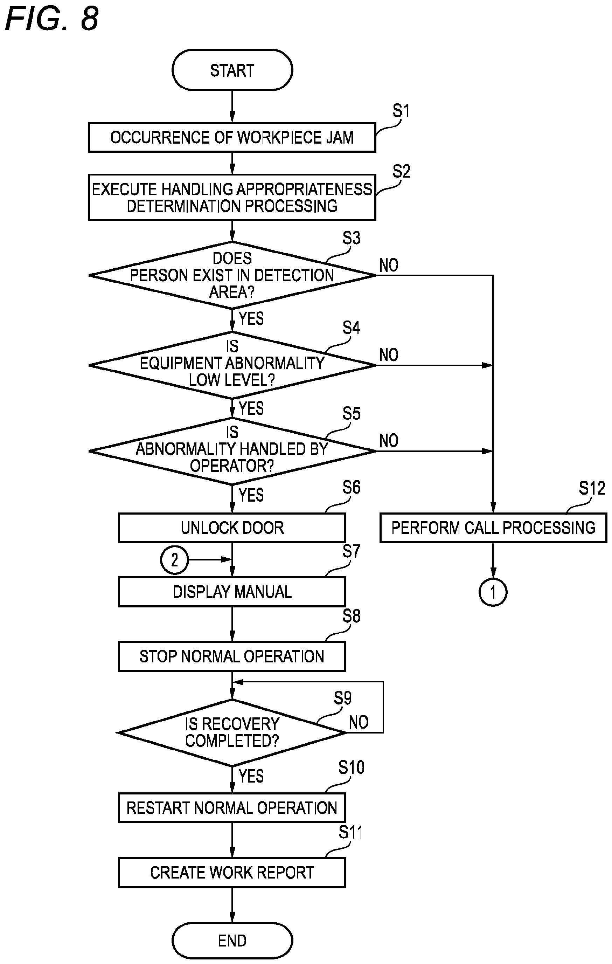

Here, as shown in a flowchart of Fig. 8, for example, it is assumed that "workpiece jam" occurs, as an equipment abnormality of a low level, in the first equipment 3A provided with the robot arm 31 (step S1). Fig. 3A is a schematic diagram showing a state in which the operator 21 in charge of the first equipment 3A is performing the production work. Fig. 3B is a schematic diagram showing a state in which the "workpiece jam" occurs in the first equipment 3A. The authority "A1C--" is set to the wearable terminal 4A of the operator 21 in charge of the first equipment 3A.

Here, the controller C1 notifies the operator 21 of a content of an equipment abnormality (a workpiece jam occurs) and an occurrence location of the equipment abnormality (near an outlet of XX) through the display device 34, the speaker, and the like. Further, the controller C1 transmits the occurrence of the "workpiece jam" to the server device 9, and requests the server device 9 to perform the "authority authentication".

The server device 9 switches the operation mode from the normal mode to the event mode, and executes the handling appropriateness determination processing (step S2). Since the server device 9 manages the entry and exit of the person H1 into and from the detection area D1, the server device 9 first determines whether the person H1 is present in the detection area D1 at that time (step S3). Here, since the operator 21 is present in the detection area D1, this case corresponds to "Yes" in step S3. When the person H1 is not present in the detection area D1 (the no-person state) (step S3: No), the processing proceeds to "call processing" in step S12.

When the person H1 is present in the detection area D1 (step S3: Yes), the server device 9 obtains a relative positional relationship between the person H1 and the equipment 3 based on an RSSI value. Then, when the condition of the "specific positional relationship" is satisfied, the server device 9 determines whether the equipment abnormality can be handled with the authority of the person H1 (whether the equipment abnormality is at a low level) (step S4). That is, the server device 9 determines whether the equipment abnormality can be handled with the authority of the person H1 based on the error handling information. Here, the "workpiece jam" which has occurred can be handled even by the operator 21, and thus this case corresponds to "Yes" in step S4. When it is determined that the equipment abnormality cannot be handled with the authority of the person H1 (step S4: No), the processing proceeds to the "call processing" in step S12.

The server device 9 determines an operation allowed by the authority of the person H1 based on the allowable operation information. Here, the server device 9 confirms that the authority level of the equipment (1) of the person is "C" based on the authority "A1C--" of the operator 21, and determines the "unlocking of the locking device 331" corresponding to the authority level "C".

The server device 9 transmits, to the controller C1 of the first equipment 3A, a permission signal allowing the unlocking of the locking device 331, as well as the fact that the person H1 currently present in the detection area D1 can handle the equipment abnormality. That is, the equipment 3 is controlled based on the authority information set for the operator 21 (the individual 2) and the relative positional relationship between the operator 21 and the first equipment 3A.

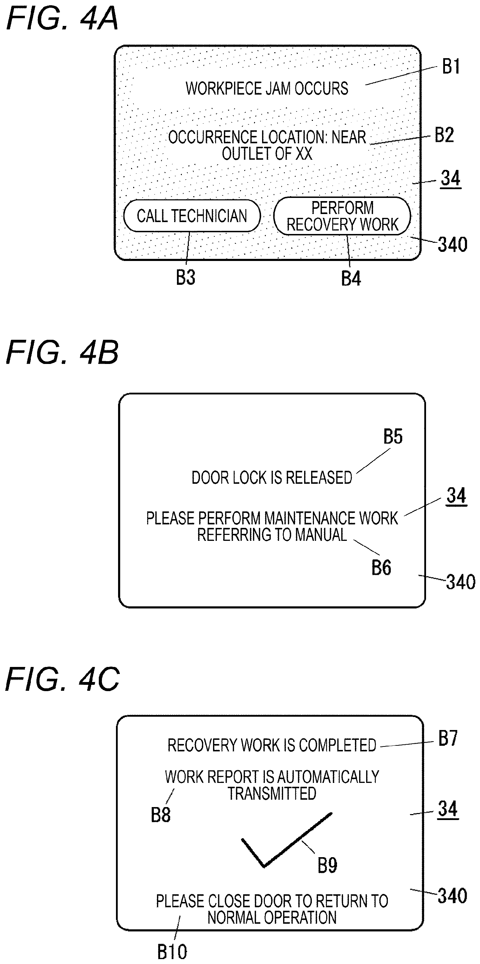

Then, as shown in Fig. 4A, the controller C1 outputs a tappable object B3 such as "call technician" and a tappable object B4 such as "perform recovery work" on a screen 340 of the display device 34. As described above, character information B1 indicating the content of the equipment abnormality such as "workpiece jam occurs" and character information B2 indicating the occurrence location of the equipment abnormality such as "near outlet of XX" in Fig. 4A are displayed at the time when the equipment abnormality occurs. The display device 34 presents, for example, the entire screen color in orange (indicated by thin dot hatching in Fig. 4A) due to the fact that the equipment abnormality is at a low level. The operator 21 can intuitively know from the screen color that the equipment abnormality is at a low level.

Through a tap operation on the object B3 or the object B4 on the screen 340, the person H1 (the operator 21) currently present in the detection area D1 can indicate an intention of whether to perform the maintenance work (the recovery work) by himself/herself (step S5).

Here, when the operator 21 taps the object B4 to indicate an intention to perform the maintenance work by himself/herself (step S5: Yes), the controller C1 unlocks the locking device 331 of the door 320 (step S6). Then, as shown in Fig. 4B, the controller C1 displays, for example, character information B5 such as "door lock is released" and character information B6 such as "please perform maintenance work referring to manual" on the display device 34. At this time, the operator 21 can open the door 320. For example, when the operator 21 is not confident in the recovery work shortly after taking charge of the first equipment 3A, the operator 21 may tap the object B3 (step S5: No), and in this case, the processing proceeds to the "call processing" in step S12.

Further, the controller C1 presents, on the display device 34, a manual for maintenance of the first equipment 3A received from the server device 9 (step S7). The operator 21 can open the door 320 and perform the recovery work while checking the manual presented on the display device 34 (see Fig. 3C). When the controller C1 detects the opening of the door 320, the controller C1 causes the control device 30 to stop the normal operation of the robot arm 31 such that the arm head and the like do not move unintentionally (step S8).

Then, when the workpiece jam is resolved (step S9: Yes), as shown in Fig. 4C, the controller C1 displays, on the display device 34, character information B7 such as "recovery work is completed", and a checkmark image B9 such that the completion of the recovery work can be intuitively understood. Unless the workpiece jam is resolved (step S9: No), the controller C1 maintains the stop of the normal operation of the robot arm 31.

As shown in Fig. 4C, the controller C1 displays character information B10 such as "please close door to return to normal operation" on the display device 34. Accordingly, when the operator 21 closes the door 320, the controller C1 locks the locking device 331 of the door 320, and causes the control device 30 to restart the normal operation of the robot arm 31 (step S10).

The controller C1 displays character information B8 such as "work report is automatically transmitted" on the display device 34, and transmits to the server device 9 that the recovery work is completed. The server device 9 automatically generates work report information while referring to the log information and the like acquired by the log acquisition unit 14 (step S11). The work report information includes an occurrence location and an occurrence time of an equipment abnormality, a content of the equipment abnormality, the identification information (the department name, the name, and the like) of the person H1 who is in charge of the recovery work, a time at which the recovery work is completed, and the like. The server device 9 transmits the generated work report information to the information terminal 8 of the administrator 23, so that the work report can be displayed on the screen in the form of a work report.

### [Operation Example 2: Arm Head Damage]

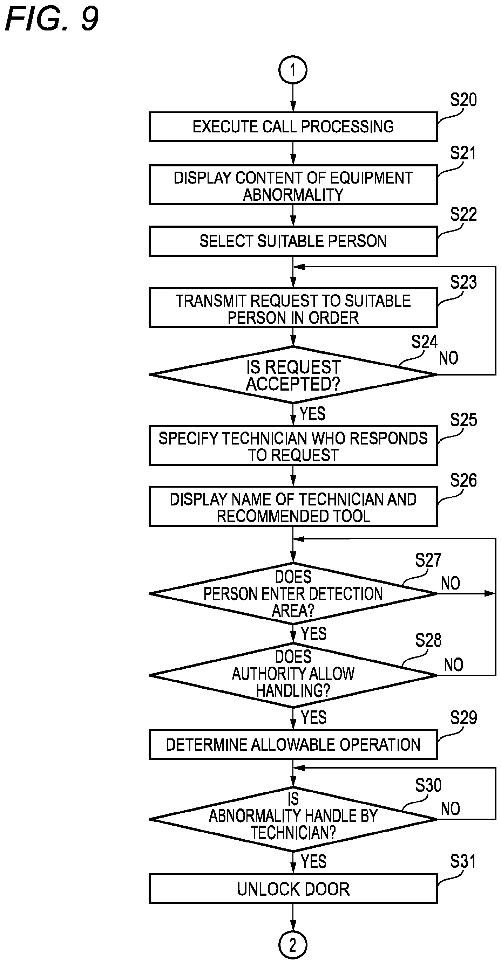

Next, an operation of the "call processing" in step S12 in Fig. 8 will be described with reference to a flowchart of Fig. 9, assuming a case where a ( middle-level) equipment abnormality such as "arm head damage" that cannot be said to be at a low level occurs in the first equipment 3A. Hereinafter, it is assumed that the authority of all the four technicians 22 in Fig. 7 is "A2ABC". That is, "A" is assigned to the authority level of the first equipment 3A.

In this case, "No" is obtained in step S4 in Fig. 8 because the equipment abnormality is not a low-level equipment abnormality, and the server device 9 executes call processing as shown in Fig. 9 (step S20). When the person H1 is not present in the detection area D1 at the time of occurrence of the equipment abnormality (step S3 in Fig. 8: No), and when the operator 21 desires to call the technician 22 (step S5 in FIG. 8: No), the call processing is also executed.

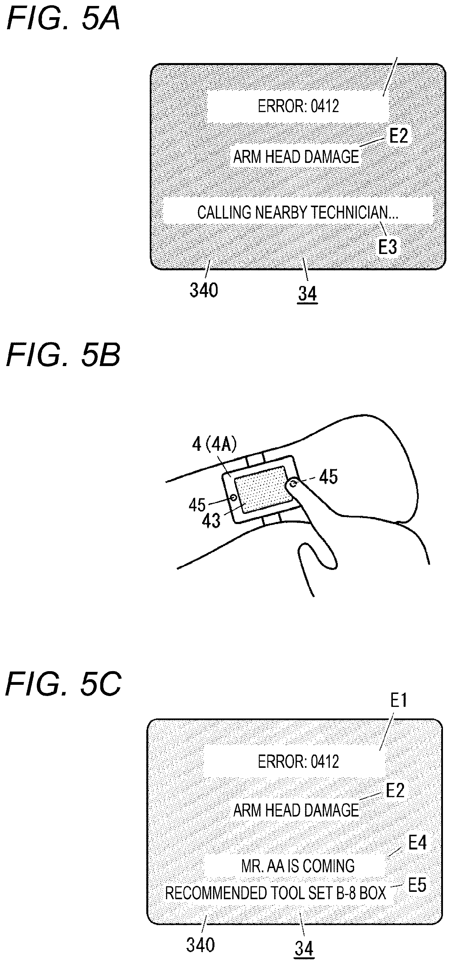

The controller C1 receives from the server device 9 that the call processing is being executed, and causes the display device 34 to display a content of the equipment abnormality and the like together with the execution of the call processing as shown in Fig. 5A (step S21). In an example of Fig. 5A, the display device 34 displays character information E1 of "error: 0412", character information E2 of "arm head damage", and character information E3 of "calling nearby technician...". Here, the equipment abnormality such as the "arm head damage" corresponds to the error code: 0412, and the character information E1 indicates the error code. The character information E2 indicates the content of the equipment abnormality.

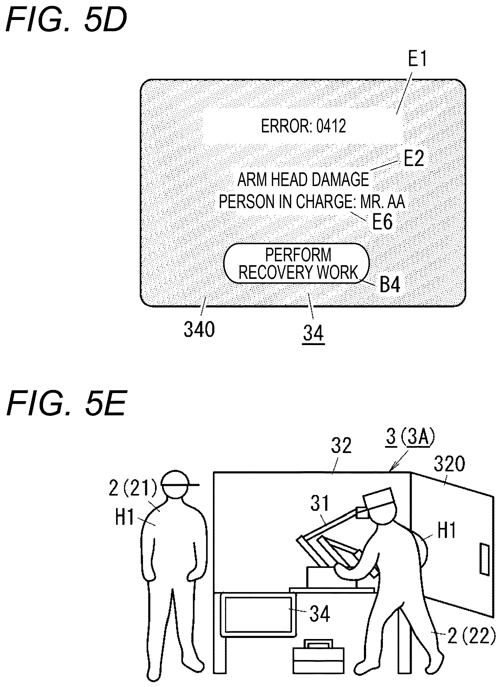

Further, the display device 34 presents, for example, the entire screen color in red (indicated by dark dot hatching in Figs. 5A, 5C, and 5D) due to the fact that the equipment abnormality is not a low-level equipment abnormality. The operator 21 intuitively knows from the screen color that the equipment abnormality is not a low-level equipment abnormality.

The server device 9 selects the person H1 (the suitable person) having the authority capable of handling the error code: 0412 based on the person information (step S22). Particularly, the server device 9 performs transmitting of the request information in order from the wearable terminal 4A of a suitable person located at a position closest to the first equipment 3A among the selected (one or more) suitable persons (step S23). It is desirable that the server device 9 excludes the administrator 23 having the highest authority "S" from the selected suitable persons.

Here, all the four technicians 22 in Fig. 7 are selected as the suitable persons. However, the technician 22 (for example, Mr. AA) walking in the passage area 202 among the four technicians 22 is located at a position closest to the first equipment 3A, and thus the server device 9 determines the wearable terminal 4A owned by the technician 22 (a first suitable person) as a first output destination OT1.

As shown in Fig. 5B, when Mr. AA who is the technician 22 confirms a handling request displayed on the display unit 43 of the wearable terminal 4A and presses the operation unit 45 on a right side to indicate an intention of "positive" (step S24: Yes), the server device 9 specifies the name and the like of the technician 22 (step S25). Then, the server device 9 transmits to the controller C1 that the technician 22 who responds to the request is secured, and performs a notification to the operator 21 through the screen 340 of the display device 34 (see Fig. 5C). In an example of Fig. 5C, in addition to the character information E1 and the character information E2, the display device 34 displays character information E4 such as "Mr. AA is coming" and character information E5 of "recommended tool set B-8 box" (step S26). The character information E4 indicates the name of the technician 22 who responds to the request. The character information E5 indicates a type (a tool number) of a tool set necessary for handling the equipment abnormality such as the "arm head damage".

Even if an equipment abnormality occurs when no person is present in the detection area D1 of the first equipment 3A, the character information E4 is displayed on the display device 34. Therefore, even if the operator 21 working at the second equipment 3B near the first equipment 3A notices the change, the operator 21 can confirm that the technician 22 (Mr. AA) is coming through the character information E4, and thus can easily return to an original post.

The information of "recommended tool set B-8 box" is also displayed on the display unit 43 of the wearable terminal 4A of the technician 22 who responds to the request. Therefore, the technician 22 who responds to the request can enter the production area 201, prepare the recommended tool set B-8 box on the tool rack 206 (see Fig. 7), and then go to the first equipment 3A. In addition to a position of the person H1 and a position of the equipment 3, the server device 9 may determine the first suitable person also in consideration of a position of the tool rack 206 or a position of a recommended tool set necessary for handling the occurred equipment abnormality. For example, an ID tag or the like is attached to the tool set, and the equipment control system 1 may manage the position of the tool set by wireless communication with the tool set. By also considering the positions of the tool rack 206 and the tool set, when the tool set is in, for example, the office area 203, the technician 22 in the office area 203 is easy to be selected as the first output destination OT1. As a result, a possibility that the technician 22 walking in the passage area 202 is selected as the first output destination OT1 can be reduced, and a possibility that time and effort to return to the office area 203 is required can be reduced.

When the technician 22 who responds to the request arrives at the occurrence site and enters the detection area D1 (step S27: Yes), the controller C1 requests the server device 9 to perform the "authority authentication" related to the technician 22. The server device 9 obtains a relative positional relationship between the technician 22 and the equipment 3 based on an RSSI value. Then, when the condition of the "specific positional relationship" is satisfied, the server device 9 determines whether the equipment abnormality can be handled with the authority of the person H1 based on the error handling information (step S28). When an event in which the person H1 enters the detection area D1 does not occur (step S27: No), the processing returns to step S27 and is repeated until the event occurs.

Here, since the technician 22 capable of handling the "arm head damage" arrives, this case corresponds to "Yes" in step S28. However, when it is determined that the equipment abnormality cannot be handled with an authority of an entering person (the person HI) (step S28: No), the server device 9 causes the display device 34 to perform a notification of waiting for a suitable person because the entering person is not the suitable person. Then, the processing returns to step S27 and is repeated until an event in which the suitable person arrives occurs.

There is a possibility that another technician 22 having the authority capable of handling the "arm head damage" accidentally enters the detection area D1 before arrival of the technician 22 (Mr. AA) who responds to the request. In step S28, the server device 9 of the present embodiment further determines whether the entering person (the person HI) matches the technician 22 (Mr. AA) who responds to the request, and transmits a determination result to the controller C1. If the entering person does not match the technician 22 who responds to the request, the controller C1 causes the display device 34 to output, for example, character information such as "please wait until Mr. AA arrives".

Then, when the processing proceeds to "Yes" in step S28, the server device 9 determines an operation allowed by the authority of the person H1 based on the allowable operation information (step S29). Here, the server device 9 confirms that the authority level of the equipment (1) of the person is "A" based on the authority "A2ABC" of the technician 22. Then, the server device 9 transmits, to the controller C1 of the first equipment 3A, a permission signal allowing "all maintenance operations including unlocking of the locking device 331" corresponding to the authority level "A". That is, the equipment 3 is controlled based on the authority information set for the technician 22 (the individual 2) and the relative positional relationship between the technician 22 and the first equipment 3A.

When the controller C1 receives the determination result (the equipment abnormality can be handled with the authority of the person H1) from the server device 9, as shown in Fig. 5D, the controller C1 outputs the tappable object B4 such as "perform recovery work" to the screen 340 of the display device 34. In an example of Fig. 5D, the display device 34 displays the character information E1, the character information E2, and character information E6 such as "person in charge: Mr. AA" in addition to the object B4. The character information E6 indicates the name of the technician 22 permitted in the authority authentication of the server device 9.

When the technician 22 taps the object B4 to indicate an intention to perform the recovery work (step S30: Yes), the controller C1 unlocks the locking device 331 of the door 320 (step S31). The controller C1 displays the character information B5 and the character information B6 on the display device 34 (see Fig. 4B). At this time, the technician 22 can open the door 320. Since the processing of step S31 and the subsequent processing are substantially the same as steps S6 to S11 of the above [Operation Example 1], the description thereof will be omitted. When an event in which the object B4 is tapped does not occur (step S30: No), the processing is repeated until the event occurs.

The server device 9 of the present embodiment displays, on the display unit 43 of the wearable terminal 4A, the content of the equipment abnormality and an estimated time required for the recovery work for the equipment abnormality. For example, the technician 22 who receives the request may determine that it is difficult to interrupt a work currently being performed by viewing the content of the equipment abnormality and the estimated time that are displayed. In this case, when the technician 22 presses the operation unit 45 on a left side (see Fig. 5B) to indicate an intention of negative with respect to the handling request displayed on the display unit 43 of the wearable terminal 4A (step S24: No), the server device 9 requests the next suitable person. When there is no response within a predetermined period, the server device 9 also requests the next suitable person. That is, the processing returns to step S23.

In the example of Fig. 7, the three technicians 22 are working in the same office area 203. Here, the server device 9 simultaneously transmits the request information to the wearable terminals 4A of all the three technicians 22 (second suitable persons) without superiority or inferiority in a positional relationship of the person H1 with respect to the first equipment 3A in the office area 203. The three technicians 22 are present in the same relatively small area, and thus can decide by verbally discussing who should handle the equipment abnormality. One of the three technicians 22 who intends to handle the equipment abnormality presses the operation unit 45 on the right side of his/her wearable terminal 4A to indicate an intention of positive, and the other two persons each press the operation unit 45 on the left side of his/her wearable terminal 4A to indicate an intention of negative.

When the request information is simultaneously transmitted to the plurality of wearable terminals 4A in this way, the server device 9 determines, as a person who responds to the request, the individual 2 of the wearable terminal 4A indicating the intention of "positive" first. Then, the server device 9 transmits the fact that a person who responds to the request is found to the other wearable terminals 4A that are requested.

When the server device 9 receives the intention of "negative" from all the selected suitable persons, the server device 9 may request the first suitable person for the first time again, or may request the wearable terminal 4A of the administrator 23, or may perform a notification to the information terminal 8.

The description has been made above that there is a possibility that another technician 22 having the authority capable of handling the "arm head damage" accidentally enters the detection area D1 before arrival of the technician 22 (Mr. AA) who responds to the request. Here, even if the entering person (the person HI) does not match the technician 22 (Mr. AA) who responds to the request, the server device 9 (a substituting system) may output the above permission signal to the controller C1 if the "arm head damage" can be handled with the authority of the entering person. That is, the position of the person H1 can change over time, and the substituting system is configured to follow the change. The substituting system notifies the wearable terminal 4A of the technician 22 (Mr. AA) who responds to the request that another technician 22 acts as a substitute for conducting the processing. A configuration of "controlling the equipment 3 based on the authority and the positional relationship" in the present embodiment is not an essential configuration for the substituting system.

### [Operation Example 3: Limitation of the number of Persons]

In the equipment control system 1 of the present embodiment, the number of persons H1 handling one equipment abnormality is not necessarily limited to one. However, when a limitation of the number of persons is not imposed, there is a possibility that occurrence of so-called "tailgating" or the like may cause confusion at the occurrence site of the equipment abnormality. Therefore, as described below, the number of persons permitted to enter (stay) into the detection area D1 is set for each type of equipment abnormality (error code). The number of persons is also set in units of authority levels. However, the following limitation of the number of persons is merely an example, and is not limited thereto.

For example, regarding a low-level equipment abnormality of an "error code (A)", a limitation is imposed in which the number of persons who can stay in the detection area D1 at the same time is three in total, and all the persons H1 have the authority level "C" or higher.

Regarding a middle-level equipment abnormality of an "error code (B)", a limitation is imposed in which the number of persons who can stay in the detection area D1 at the same time is two in total, and at least one person H1 having the authority of the authority level "B" or higher is included. In this case, for example, as shown in Fig. 5E, the operator 21 and the technician 22 can stay in the detection area D1 at the same time.

Further, regarding a high-level equipment abnormality of an "error code (C)", a limitation is imposed in which the number of persons who can stay in the detection area D1 at the same time is one in total, and the person H1 has the authority of the authority level "A" or higher.

When the server device 9 detects a situation in which the above limitation of the number of persons is violated, for example, the server device 9 causes the display device 34 to display a warning message including the violation of the limitation of the number of persons, and causes the speaker to emit the warning sound. The server device 9 issues an instruction to the controller C1 so as not to allow the maintenance operation until the violation is eliminated.

The setting related to the above limitation is stored in the storage unit 15 of the server device 9. For example, the information terminal 8 is configured to receive a setting change related to the above limitation by activating the dedicated application software.

In addition to a concept of "limitation of the number of persons", as described above, the "number of persons necessary" for handling the equipment abnormality may be set for the error code. For example, regarding an equipment abnormality, a condition may be imposed that at least three persons H1 having an authority of an authority level or higher are necessary. In this case, when the server device 9 detects a situation in which the above condition is not satisfied, for example, the server device 9 causes the display device 34 to display a warning message including an insufficiency of the number of persons, and causes the speaker to emit the warning sound. The server device 9 issues an instruction to the controller C1 so as not to allow the maintenance operation until the insufficiency of the number of persons is eliminated.

A subject of the limitation may be a distance between the person H1 and the equipment 3, a stay time in the detection area D1, or the like, in addition to the "number of persons".

For example, when the server device 9 detects a situation in which the person H1 is located at a position so close to the equipment 3 that a distance between the person H1 and the equipment 3 is less than a predetermined distance, the server device 9 may cause the display device 34 to display a warning message including the fact that the person H1 is located at the position close to the equipment 3, and cause the speaker to emit the warning sound. The "predetermined distance" may be set differently for each equipment abnormality, for each equipment 3, and/or for each authority of the person H1. The warning operation may be performed, regardless of whether an equipment abnormality occurs, as long as a condition that the distance between the person H1 and the equipment 3 is less than the predetermined distance is satisfied.

When the server device 9 detects that the stay time of the person H1 in the detection area D1 exceeds a predetermined time, the server device 9 may cause the display device 34 to display a warning message including the exceeding of the stay time, and cause the speaker to emit the warning sound. The "predetermined time" may be set differently for each equipment abnormality, for each equipment 3, and/or for each authority of the person H 1. The warning operation may also be performed, regardless of whether an equipment abnormality occurs, as long as a condition that the stay time exceeds the predetermined time is satisfied.

### [Advantages]

As described above in Operation Example 1 and Operation Example 2, according to the equipment control system 1 of the present embodiment, the server device 9 (the control unit 10) controls the equipment 3 based on the authority information set for the individual 2 and the relative positional relationship between the individual 2 and the equipment 3. Therefore, it is possible to improve the compatibility of the equipment 3 and the individuals 2 such as persons.

In the present embodiment, also in the call processing, a suitable person is selected from the plurality of individuals 2 based on the authority information set for the individual 2 and the relative positional relationship between the individual 2 and the equipment 3. Therefore, it is possible to further improve the compatibility.

In the present embodiment, the authority is associated with the plurality of terminals 4 owned by the plurality of individuals 2, respectively. Therefore, as compared with a case where the authority is associated with the individual 2 itself (for example, an appearance of a face of a person or the like), it is not necessary to provide an imaging means (a camera or the like) for imaging the individual 2, and it is possible to improve the compatibility more easily.

Further, in the present embodiment, the server device 9 (the control unit 10) causes the equipment 3 to perform the maintenance operation when the equipment 3 and the individual 2 in which the authority including the operation authority allowing the maintenance operation of the equipment 3 is set are in the specific positional relationship. Therefore, a possibility can be reduced that the equipment 3 unintentionally performs the maintenance operation, for example, when the individual 2 having no operation authority is in the specific positional relationship.

Further, in the present embodiment, the server device 9 (the request unit 11) outputs, to the wearable terminal 4A of the individual 2, the request information requesting the handling of the equipment abnormality when the equipment abnormality occurs. Therefore, the individual 2 receiving the request information can know that the equipment abnormality occurs and the handling is necessary. Therefore, it is possible to further improve the compatibility of the individual 2 and the equipment 3. Particularly, the output destination OT1 of the request information is determined based on the authority, and thus a possibility is reduced that the request information is output to, for example, the individual 2 not having the authority capable of handling the equipment abnormality.

### (2.8) Time Line Display

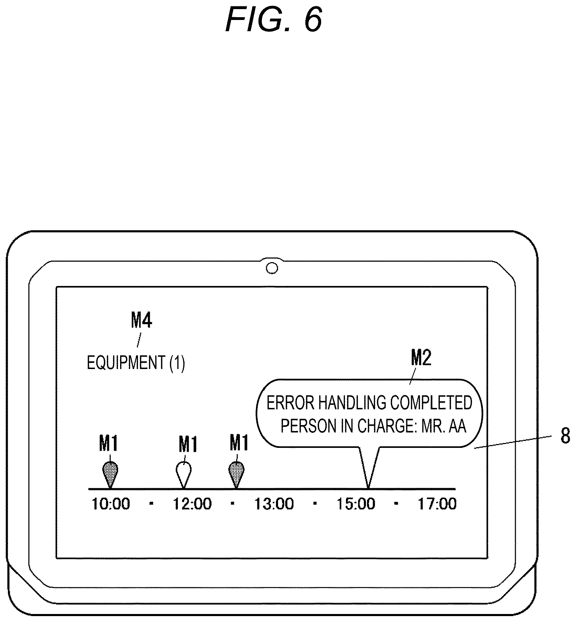

The server device 9 (the log acquisition unit 14) acquires the log information regardless of whether the equipment abnormality is at a low level, and accumulates the log information in the storage unit 15. Here, as shown in Fig. 6, the server device 9 causes the information terminal 8 for the administrator to display a time line in which occurrence of a specific event can be viewed in time series.

Fig. 6 shows a time line related to a specific event occurring in the first equipment 3A. In Fig. 6, the information terminal 8 displays character information M4 of "equipment (1)" as the name of the first equipment 3A on an upper left of the screen. In Fig. 6, a plurality of markers M1 are arranged side by side along a horizontal axis (a time axis). The marker M1 indicates that a specific event occurs at that time. Further, the person H1 (for example, the administrator 23) can confirm detailed information (a detail field M2) related to the specific event occurring at that time by tapping the marker M1 on the screen of the information terminal 8 with a finger, clicking the marker M1 with a pointer of an attached mouse, or the like. An example of Fig. 6 shows a state in which the marker M1 is changed to the detail field M2 by tapping the marker M1 attached at 15:30.

In the example of Fig. 6, by checking the detail field M2, the administrator 23 can easily understand that the equipment abnormality occurs in the equipment (1) at 15:30, and that "Mr. AA" is in charge of the handling and the equipment abnormality is eliminated. The markers M1 are displayed in different colors according to the level of the equipment abnormality. In the shown example, the time line is displayed in a time zone of several hours, but can also be displayed in units of days, weeks, and months.

Particularly, the administrator 23 can easily find through the time line display that an event (an equipment abnormality) intensively occurs in a specific time zone for a specific equipment 3 and the like, which can be used for improvement of a production plan in the future and the like.

### (2.9) Management of Mobile Body

There is also a possibility that the automated guided vehicle 24, which is the mobile body H2, enters into (exits from) the detection area D1 during the normal operation, the recovery work, or the calling of the suitable person of the equipment 3. As a result, the controller C1 can determine that the individual 2 enters the detection area D1 based on the detection signal from the individual detection unit 5.

However, the controller C1 acquires the authority "B4---" assigned to the automated guided vehicle 24 from the communication device 6 communicating with the mobile terminal 4B. Further, in consideration of the responsiveness, the controller C1 stores the authority of the automated guided vehicle 24 in its own memory. Even when the individual 2 enters the detection area D1, when the controller C1 determines that the individual 2 is the automated guided vehicle 24 based on the authority acquired from the communication device 6, the controller C1 does not request the server device 9 to perform the "authority authentication" related to the entered individual 2. That is, the controller C1 immediately determines by itself that the individual 2 is the automated guided vehicle 24, and performs a corresponding prescribed operation when the automated guided vehicle 24 enters. For example, when the equipment 3 is in the normal operation, the normal operation is maintained even if the automated guided vehicle 24 enters the detection area D1.

In this way, in the equipment control system 1 of the present embodiment, the controller C1 independently determines the operation control of the equipment 3 depending on the authority of the individual 2, so that the responsiveness can be improved. An amount of communication (communication traffic) in the facility 200 can be reduced.

### (3) Modifications

The above embodiment is merely one of various embodiments of the present disclosure. The above embodiment can be variously modified according to the design and the like as long as the object of the present disclosure can be achieved. The same functions as those of the equipment control system 1 according to the above embodiment may be implemented by a processing method, a computer program, a non-transitory recording medium in which a computer program is recorded, or the like. Specifically, a processing method of the equipment control system 1 according to one aspect includes controlling the equipment 3 based on the authority set for each of the plurality of individuals 2 and the relative positional relationship between the equipment 3 and each of the plurality of individuals 2.

Hereinafter, modifications of the above embodiment will be listed. The modifications described below can be applied in combination as appropriate. Hereinafter, the above embodiment may be referred to as a "basic example".

The equipment control system 1 in the present disclosure includes a computer system. The computer system has a main configuration of a processor and a memory as hardware. When the processor executes a program recorded in the memory of the computer system, the functions as the equipment control system 1 in the present disclosure are realized. The program may be recorded in advance in the memory of the computer system, may be provided through a telecommunication line, or may be provided by being recorded in a non-transitory recording medium such as a memory card, an optical disk, or a hard disk drive that can be read by the computer system. The processor of the computer system includes one or more electronic circuits including a semiconductor integrated circuit (IC) or a large scale integrated circuit (LSI). The integrated circuit such as IC or LSI here has a different name depending on a degree of integration, and includes an integrated circuit called a system LSI, very large scale integration (VLSI), or ultra large scale integration (ULSI). Further, it is also possible to adopt, as the processor, a field-programmable gate array (FPGA), or a logic device capable of reconstructing a junction relationship inside the LSI or reconstructing a circuit section inside the LSI, which are programmed after the LSI is manufactured. The plurality of electronic circuits may be integrated into one chip or may be provided in a plurality of chips in a distributed manner. The plurality of chips may be integrated into one device or may be provided in a plurality of devices in a distributed manner. The computer system here includes a microcontroller including one or more processors and one or more memories. Therefore, the microcontroller also includes one or more electronic circuits including a semiconductor integrated circuit or a large scale integrated circuit.

It is not an essential configuration that a plurality of functions of the equipment control system 1 are integrated in one housing. The constituent elements of the equipment control system 1 may be provided in a plurality of housings in a distributed manner. In contrast, the plurality of functions of the equipment control system 1 may be integrated in one housing. Further, at least a part of the functions of the equipment control system 1, for example, a part of the functions of the equipment control system 1 may be realized by a cloud (cloud computing) or the like.

In the basic example, in the allowable operation information, the normal operation and the maintenance operation are described as the types of the allowable operation of the equipment 3 associated with the authority level. However, the allowable operation may further include an "emergency operation". For example, when the person H1 having the operator authority approaches a specific region around the equipment 3 while working in the detection area D1, an operation such as an emergency stop (may be speed relaxation) of movement of a specific portion of the equipment 3 may be performed. Accordingly, a possibility is further increased that the protective fence as described in Patent Literature 1, for example, can be removed, or structural relaxation can be realized, and the compatibility of the equipment 3 and the individuals 2 such as persons can be more improved.

In the basic example, the functions of the equipment control system 1 are distributed to the controller C1 of the equipment system 100 and the server device 9. However, the server device 9 may have a part or all of the functions of the controller C1 of the basic example.

In contrast, the controller C1 of the equipment system 100 may have a part or all of the functions of the server device 9 of the basic example. Particularly, in consideration of further improvement in the responsiveness regarding the authority authentication, it is preferable that the controller C1 has an authentication function as much as possible.

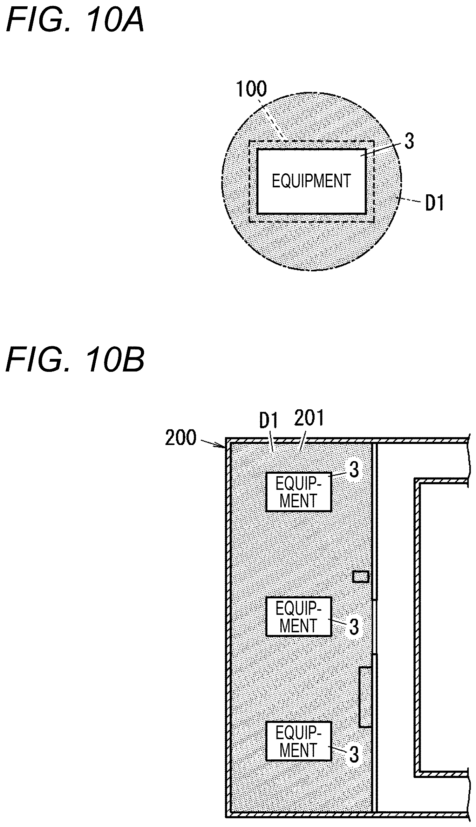

In the basic example, the detection area D1 is set on the front side of the equipment 3 (the robot arm 31). However, as shown in Fig. 10A, the detection area D1 may be set to surround the entire four sides of the equipment 3. One detection area D1 may be set as a relatively wide region to cover the plurality of equipment 3. For example, as shown in Fig. 10B, the detection area D1 may correspond to the entire region of the production area 201.

In the basic example, the equipment 3 includes the robot arm 31 accommodated in the case 32. However, the equipment 3 may include, for example, a mobile (for example, walking) production robot mounted with artificial intelligence (AI) technology and autonomously performing work in the production area 201. The individual detection unit 5 and the communication device 6 are provided in the mobile production robot. In this case, the case 32 is omitted. The detection area D1 is not a fixed area but a variable area. In such equipment 3, the compatibility of the equipment 3 and the individuals 2 such as persons is also improved by the configuration of controlling the equipment 3 based on the "authority" and the "positional relationship" in the equipment control system 1.

In the basic example, the individual detection unit 5 is implemented by an ultrasonic sensor attached to the case 32. However, a type of the individual detection unit 5 and an installation location thereof are not particularly limited.

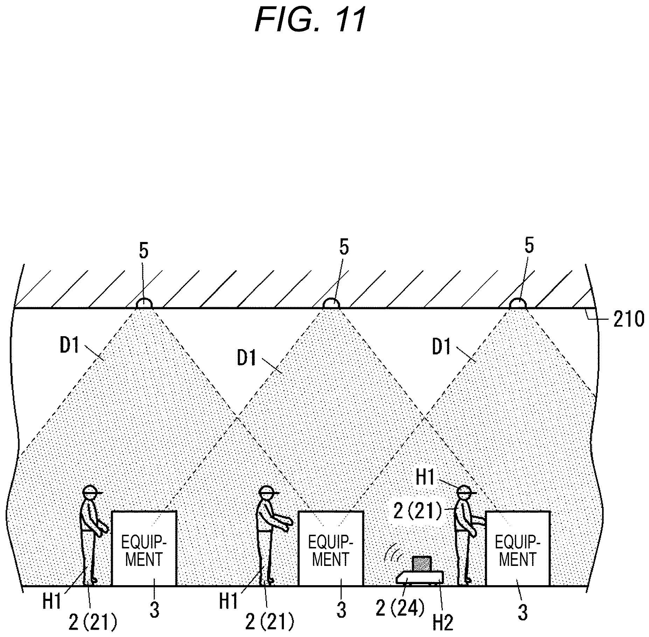

For example, as shown in Fig. 11, a plurality of individual detection units 5 may be embedded (or directly attached) to a ceiling surface 210 of the facility 200. In the shown example, one individual detection unit 5 is disposed directly above each equipment 3, but the present invention is not limited thereto. The individual detection unit 5 may be attached to an illumination device, an air conditioner, an air cleaner, or the like disposed on the ceiling surface 210 of the facility 200. As shown in Fig. 11, the detection areas D1 of the two adjacent individual detection units 5 are set to overlap each other, so that blind spots related to the detection of the individuals 2 in the production area 201 can be reduced.

The individual detection unit 5 may be a radar device that transmits microwaves. The individual detection unit 5 may determine the presence or absence of the individual 2 in the detection area D1 by irradiating a floor surface with microwaves from the ceiling surface 210 (see Fig. 11) and detecting a change in frequency caused by movement of the individual 2.

The individual detection unit 5 may be an optical sensor. The individual detection unit 5 may determine the presence or absence of the individual 2 in the detection area D1 by constantly irradiating, for example, the vicinity of the floor surface of the facility 200 with near infrared rays and detecting a change in reflection amount of the infrared rays caused by the individual 2 entering the detection area D1.

The individual detection unit 5 may be implemented by an infrared array sensor in which a plurality of sensor elements (for example, thermopiles) detecting infrared rays are two-dimensionally arranged. The "infrared rays" include, for example, a light ray (a heat ray) emitted from a human body when the person H1 is present in the detection area D1, and may include light having a wavelength of around 10 [µm]. In this case, the individual detection unit 5 generates a two-dimensional static thermal image based on an amount of light received by the sensor elements. The controller C1 (or the server device 9) determines the presence or absence of the individual 2 in the detection area D1 based on static thermal image data.

The individual detection unit 5 may be implemented by an imaging unit such as a camera. In this case, the controller C1 or the server device 9 determines the presence or absence of the individual 2 in the detection area D1 by storing, for example, a reference image of the detection area D1 in the no-person state and comparing an image (a static image or a moving image) captured by the individual detection unit 5 with the reference image.

In the basic example, the server device 9 periodically acquires and manages the current positional information of the terminal 4 via the router 7 from the terminal 4 (the wearable terminal 4A and the mobile terminal 4B) using the GPS or the like. However, depending on a structure (an underground area or the like) of a building of the facility 200, a GPS signal may not reach. Therefore, the server device 9 may manage the current positional information of the terminal 4 in the facility 200 using a local positioning system (LPS) instead of or in addition to the GPS. In this case, a plurality of scanner devices that wirelessly communicate with the terminal 4 or a terminal different from the terminal 4 (for example, a smartphone carried by the person H1 or an ID tag) are arranged, for example, on the ceiling surface of the facility 200. In this case, the scanner device may also serve as the individual detection unit 5.

In the basic example, the authority is associated with the terminal 4 owned by the individual 2. However, the authority may be associated with the individual 2 itself (for example, an appearance of a face of a person or the like). In this case, for example, the equipment system 100 includes an imaging device that captures a face of the individual 2 instead of or in addition to the communication device 6, and the controller C1 transmits face image data captured by the imaging device to the server device 9. The server device 9 stores, in the storage unit 15, reference images (face images) of all the persons H1 in the facility 200, and compares the face image data received from the controller C1 with the reference images. When the server device 9 finds a matching reference image, the server device 9 extracts authority information associated with the reference image. In short, the server device 9 executes face authentication processing. In addition to the imaging device, the equipment system 100 may include a reading device that reads a fingerprint or an iris of the individual 2, and the server device 9 may execute processing of fingerprint authentication or iris authentication.

Alternatively, the authority may be a password stored in the individual 2 itself. The equipment system 100 may include an operation panel that receives input of alphanumeric characters and the like, and the server device 9 may perform authority authentication by inputting a password to the operation panel. The password may include, for example, alphanumeric characters that can be known by each person alone, in addition to the authority "A2ABC" described in the basic example.

### (4) Summary

As described above, an equipment control system (1) according to a first aspect includes a control unit (10) configured to control equipment (3) based on an authority set for each of a plurality of individuals (2) and a relative positional relationship between the equipment (3) and each of the plurality of individuals (2). According to the first aspect, it is possible to improve the compatibility of the equipment and the individuals such as persons.

Regarding the equipment control system (1) according to a second aspect, in the first aspect, the authority is associated with each of a plurality of terminals (4) owned by the plurality of individuals (2), respectively. According to the second aspect, as compared with a case where the authority is associated with the individual (2) itself (for example, an appearance of a face of a person or the like), it is not necessary to provide an imaging means (a camera or the like) for imaging the individual (2), and it is possible to improve the compatibility more easily.

Regarding the equipment control system (1) according to a third aspect, in the first aspect or the second aspect, the positional relationship is information based on positional information of the plurality of terminals (4) owned by the plurality of individuals (2), respectively. According to the third aspect, it is possible to perform control based on the relative positional relationship between the terminal (4) and the equipment (3), and it is possible to more improve the compatibility.

Regarding the equipment control system (1) according to a fourth aspect, in any one of the first to third aspects, the control unit (10) causes the equipment (3) to perform a specific operation in the following case. That is, the control unit (10) causes the equipment (3) to perform the specific operation of the equipment (3) when the equipment (3) and the individual (2) in which the authority including an operation authority allowing the specific operation is set, among the plurality of individuals (2), are in a specific positional relationship. According to the fourth aspect, a possibility can be reduced that the equipment (3) unintentionally performs the specific operation, for example, when the individual (2) having no operation authority is in the specific positional relationship.

Regarding the equipment control system (1) according to a fifth aspect, in the fourth aspect, the specific operation includes an operation related to maintenance of the equipment (3). According to the fifth aspect, it is possible to further improve the compatibility of the equipment (3) and the individual (2) performing maintenance.

Regarding the equipment control system (1) according to a sixth aspect, in any one of the first to fifth aspects, the authority is set in a plurality of stages. According to the sixth aspect, the authority of each individual (2) can be differentiated, for example, by setting the authority in different stages to the plurality of individuals (2).

The equipment control system (1) according to a seventh aspect further includes a request unit (11) in any one of the first to sixth aspects. When a specific event related to the equipment (3) occurs, the request unit (11) outputs request information requesting handling of the specific event to at least one of the plurality of individuals (2). According to the seventh aspect, the individual (2) receiving the request information can know that the specific event occurs and the handling is necessary, and it is possible to further improve the compatibility of the individual (2) and the equipment (3).

Regarding the equipment control system (1) according to an eighth aspect, in the seventh aspect, the request unit (11) is configured to determine an output destination (OT1) of the request information based on the authority. According to the eighth aspect, a possibility is reduced that the request information is output to, for example, the individual (2) not having the authority capable of handling the specific event.

The equipment control system (1) according to a ninth aspect further includes a response detection unit (12) in the seventh aspect or the eighth aspect. The response detection unit (12) is configured to detect the individual (2) responding to the request information among the plurality of individuals (2). According to the ninth aspect, the individual (2) making a response can be easily managed.

The equipment control system (1) according to a tenth aspect further includes a presentation unit (13) in the ninth aspect. When a response of the individual (2) detected by the response detection unit (12) is a positive response, the presentation unit (13) presents handling information related to the handling of the specific event to the individual (2). According to the tenth aspect, the work efficiency is improved when the individual (2) handles the specific event.

The equipment control system (1) according to an eleventh aspect further includes a log acquisition unit (14) in any one of the first to tenth aspects. The log acquisition unit (14) is configured to acquire a log related to at least one of a control of the control unit (10) and an operation of the equipment (3). According to the eleventh aspect, it is possible to easily analyze a cause and the like of various events occurring in the equipment (3).

Regarding the equipment control system (1) according to a twelfth aspect, in any one of the first to eleventh aspects, the authority includes an unpermitted authority that does not allow the specific operation of the equipment (3). According to the twelfth aspect, by setting the authority including the unpermitted authority to the individual (2), a possibility can be reduced that the equipment (3) unintentionally performs a specific operation when the individual (2) and the equipment (3) unintentionally satisfy, for example, a specific positional relationship.

Regarding the equipment control system (1) according to a thirteenth aspect, in any one of the first to twelfth aspects, the positional relationship is information based on a measurement result obtained by measuring positions of the plurality of individuals (2) with reference to the equipment (3) using radio waves. According to the thirteenth aspect, a load related to processing for obtaining the positional relationship can be reduced as compared with a case of using an image captured by, for example, an imaging means.

The equipment control system (1) according to a fourteenth aspect further includes an individual detection unit (5) configured to detect presence or absence of the plurality of individuals (2) in a detection area (D1) set around the equipment (3) in any one of the first to thirteenth aspects. The control unit (10) is configured to obtain the positional relationship by using, as a trigger, detection of entry of the individual (2) into the detection area (D1) by the individual detection unit (5). According to the fourteenth aspect, unnecessary execution of processing for obtaining the positional relationship can be prevented, and a load can be reduced.

A control method according to a fifteenth aspect is a control method for the equipment control system (1). The control method includes controlling the equipment (3) based on the authority set for each of the plurality of individuals (2) and the relative positional relationship between the equipment (3) and each of the plurality of individuals (2). According to the fifteenth aspect, it is possible to provide a control method capable of improving the compatibility of the equipment and the individuals such as persons.

A program according to a sixteenth aspect is a program configured to cause one or more processors to execute the control method according to the fifteenth aspect. According to the sixteenth aspect, it is possible to provide a function capable of improving the compatibility of the equipment and the individuals such as persons.

The configurations according to the second to fourteenth aspects are not essential configurations for the equipment control system (1), and can be omitted as appropriate.

Although the present disclosure has been described in detail with reference to the specific embodiment, it will be apparent to those skilled in the art that various changes and modifications can be made without departing from the spirit and scope of the present disclosure.

The present disclosure is based on Japanese Patent Application filed on January 17, 2020 (Japanese Patent Application No. 2020-006371), and the contents thereof are incorporated herein by reference.

### REFERENCE SIGNS LIST

1: equipment control system
2: individual
3: equipment
4: terminal
5: individual detection unit
10: control unit
11: request unit
12: response detection unit
13: presentation unit
14: log acquisition unit
D1: detection area
OT1: output destination

## Claims

1. An equipment control system comprising:
a control unit configured to control equipment based on an authority set for each of a plurality of individuals and a relative positional relationship between the equipment and each of the plurality of individuals.

2. The equipment control system according to claim 1,
wherein the authority is associated with each of a plurality of terminals owned by the plurality of individuals, respectively.

3. The equipment control system according to claim 1 or 2,
wherein the positional relationship is information based on positional information of a plurality of terminals owned by the plurality of individuals, respectively.

4. The equipment control system according to any one of claims 1 to 3,
wherein the control unit causes the equipment to perform a specific operation of the equipment in a case in which the equipment and an individual, among the plurality of individuals, for which the authority including an operation authority allowing the specific operation is set are in a specific positional relationship.

5. The equipment control system according to claim 4,
wherein the specific operation includes an operation related to maintenance of the equipment.

6. The equipment control system according to any one of claims 1 to 5,
wherein the authority is set in a plurality of stages.

7. The equipment control system according to any one of claims 1 to 6, further comprising:
a request unit configured to output, in a case in which a specific event related to the equipment occurs, request information requesting handling of the specific event to at least one of the plurality of individuals.

8. The equipment control system according to claim 7,
wherein the request unit is configured to determine an output destination of the request information based on the authority.

9. The equipment control system according to claim 7 or 8, further comprising:
a response detection unit configured to detect an individual, among the plurality of individuals, responding to the request information.

10. The equipment control system according to claim 9, further comprising:
a presentation unit configured to present handling information related to the handling of the specific event to the individual in a case in which a response of the individual detected by the response detection unit is a positive response.

11. The equipment control system according to any one of claims 1 to 10, further comprising:
a log acquisition unit configured to acquire a log related to at least one of a control of the control unit and an operation of the equipment.

12. The equipment control system according to any one of claims 1 to 11,
wherein the authority includes an unpermitted authority that does not allow a specific operation of the equipment.

13. The equipment control system according to any one of claims 1 to 12,
wherein the positional relationship is information based on a measurement result obtained by measuring positions of the plurality of individuals with reference to the equipment using radio waves.

14. The equipment control system according to any one of claims 1 to 13, further comprising:
an individual detection unit configured to detect presence or absence of the plurality of individuals in a detection area set around the equipment,
wherein the control unit is configured to obtain the positional relationship by using, as a trigger, detection of entry of an individual into the detection area by the individual detection unit.

15. A control method for an equipment control system, the control method comprising:
controlling equipment based on an authority set for each of a plurality of individuals and a relative positional relationship between the equipment and each of the plurality of individuals.

16. A program for causing one or more processors to execute the control method according to claim 15.
